# EUROPEAN PATENT SPECIFICATION

(11) **EP 3 729 696 B1**
(45) Date of publication and mention of the grant of the patent: **02.08.2023**
(21) Application number: 17828730.6
(22) Date of filing: 20.12.2017
(51) Int. Cl.: H04L 1/00

(54) **TECHNIQUE FOR REPORTING CHANNEL STATE INFORMATION**
TECHNIK ZUR MELDUNG VON KANALZUSTANDSINFORMATIONEN
TECHNIQUE DE RAPPORT D'INFORMATIONS D'ÉTAT DE CANAL

(43) Date of publication of application: 28.10.2020
(73) Proprietor: Telefonaktiebolaget LM Ericsson (publ), 164 83 Stockholm (SE)
(72) Inventor: FRÖBERG OLSSON, Jonas, 590 74 Ljungsbro (SE); CIRKIC, Mirsad, 589 39 Linköping (SE); BERGLUND, Joel, 58 333 Linköping (SE)
(74) Representative: Ericsson
(86) International application number: PCT/EP2017/083857
(87) International publication number: WO 2019/120520

(56) References cited:
- WO-A1-2011/127092
- WO-A1-2016/089106
- "3rd Generation Partnership Project; Technical Specification Group Radio Access Network; NR; Physical layer procedures for data (Release 15)", 3GPP DRAFT; RP-172416 38214-200, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 17 December 2017 (2017-12-17), XP051365107, Retrieved from the Internet: URL:http://www.3gpp.org/Meetings_3GPP_SYNC /RAN/Docs/RP-172416 38214-200.doc [retrieved on 2017-12-17]

## Description

### Technical Field

The present disclosure generally relates to a technique for reporting channel state information (CSI). More specifically, methods and devices are provided for reporting and receiving CSI in a radio access network (RAN).

### Background

In release 10 of Long Term Evolution (LTE) defined by the Third Generation Partnership Project (3GPP), channel state information (CSI) reference signals (CSI-RSs) were introduced. Based on the CSI reported from a user equipment (UE) to an LTE base station, downlink spatial multiplexing with up to eight layers was made possible. The CSI-RSs are used by the UE to acquire CSI when Demodulation Reference Signals (DM-RS) are being used. The CSI-RS can be transmitted by the base station with a periodicity ranging from 5 ms to 80 ms.

The reports from the CSI-RS can be periodic or aperiodic. The periodic reports are, as the name suggests, delivered with a certain periodicity. The periodic reports are in LTE transmitted on a physical uplink control channel (PUCCH) unless the UE has an uplink (UL) grant, which is transmitted on a physical downlink control channel (PDCCH). In the latter case, the CSI report is multiplexed with physical uplink shared channel (PUSCH) data.

In contrast, the aperiodic reports are delivered by the UE upon request from the radio access network (RAN) using an UL grant in which a CSI request flag is set. The RAN may grant the UE with a PUSCH transmission comprising CSI only or both data and CSI.

Once a CSI process with periodic CSI reports has been setup, the CSI reports are transmitted, even when no data is being transmitted, until the CSI process is reconfigured. Hence, although there is currently no downlink (DL) data to be transmitted to the UE, the UE continues transmitting the CSI on the PUCCH and the RAN receives the CSI, even if the RAN does not use the received CSI.

One approach to avoid unnecessary transmissions on the PUCCH may rely solely on aperiodic reports. However, such an approach has the disadvantage that when DL data to the UE appears at the base station, the CSI may be inaccurate (e.g., outdated), which may cause the RAN to trigger and wait for an updated CSI report until the DL data may be transmitted, thus increasing latency. Alternatively to waiting for a CSI update, the RAN may directly transmit the DL data based on the old CSI. However, such a transmission is not optimized for the current radio conditions, which in turn may lead to degraded performance and increased resource consumption, e.g., due to retransmission.

The document WO 2011/127092 A1 describes a method for sending a CSI reporting request on one component carrier and indicating a set of component carriers within this request for which to provide the CSI report.

Another approach to avoid unnecessary transmissions on the PUCCH is that the RAN may trigger an aperiodic CSI report regularly (e.g. periodically) from the UE to receive an update of the CSI. However, this approach has the disadvantage that many scheduling grants must be transmitted, which increases the load on the PDCCH. In some state-of-the-art solutions periodic CSI reporting is configured in parallel with aperiodic CSI-reporting, wherein the aperiodic reports are triggered between the periodic reports when the UE has (DL) data. The difficulty, of choosing a period for the periodic reports that is short enough so that the CSI is not outdated even if no aperiodic report has been granted in between periods and a period that is long enough not to cause too much overhead, still remains. If the period is too long, the network will anyway most often need to grant an aperiodic report to get updated CSI before starting the data transmission, which makes the periodic reporting superfluous.

For the technique described in the document WO 2016/116669 A1, a network node transmits to a UE a configuration of two aperiodic CSI reporting modes per DL component carrier. Based on the transmitted configuration, the network controls via a trigger indicator, which aperiodic CSI reporting mode the UE should use. The configuration trigger is defined in standardized tables, so that the CSI request from the network includes one, two or more bits, depending on the size of the table, which bits indicate which reporting mode should be used. This reduces the configuration information to be transmitted each time the reporting configuration needs to be changed, since the change can be indicated in the CSI request. However, it is the network that controls or triggers, which reporting configuration is required, so that the aforementioned overhead caused by scheduling grants for CSI reports remains.

### Summary

Accordingly, there is a need for a technique that provides more accurate and/or more frequent channel state information at least in certain situations. Alternatively or in addition, there is a need for a technique that reduces the overhead caused by scheduling channel state information reports.

As to one aspect, a method of reporting channel state information (CSI) from a wireless device to a radio node is provided. The wireless device is wirelessly connected or connectable to the radio node. The method comprises a step of storing, at the wireless device, different CSI configurations associated with different CSI states. The CSI states include at least one active CSI state. According to the CSI configuration associated with the active CSI state, the CSI is periodically reported by the wireless device in the active state. The CSI configurations comprise at least one transition criterion for a state transition between the CSI states. The transition criterion for the transition to the active state includes a change of the CSI. The method comprises a step of determining, by the wireless device, the state transition to a CSI state among the CSI states if the corresponding transition criterion is fulfilled. The method comprises a step of reporting the CSI according to the CSI configuration that is associated with the CSI state resulting from the determination.

The radio node may comprise a radio access node of a radio access network (RAN). Alternatively or in addition, the radio node may comprise another wireless device in a device-to-device (D2D) communication with the wireless device.

By enabling the wireless device to determine if or when to transition between the CSI states, the associated CSI configuration can be applied more rapidly or the CSI configuration can be changed more frequently at least in some embodiments. Unnecessary CSI transmission on a physical uplink control channel (PUCCH) can be reduced, avoided or rapidly terminated by the wireless device. For example, scarce resources on the PUCCH are not occupied by unused CSI reports. Alternatively or in addition, the radio node and/or the RAN can be provided with CSI more rapidly when needed. For example, the CSI can be reported preemptively.

Same or further embodiments can reduce the signaling overhead for scheduling CSI reports. The wireless device may use shared radio resource for transmitting CSI reports. For example, the wireless device may use shared radio resource for reporting the CSI when the need for the CSI is not anticipated or cannot be anticipated by the radio node and/or the RAN.

The technique may be implemented as a technique for dynamically reporting the CSI. Particularly, the technique may be implemented for reporting the CSI at a level of detailedness, a temporal resolution and/or a periodicity that corresponds to the need for CSI updates at the radio node and/or the RAN.

The step of storing different CSI configurations at (or in) the wireless device, which are associated with different CSI states, may be implemented by providing the different CSI configurations in storage of the wireless device. The different CSI configurations associated with different CSI states may be stored, e.g., hard-coded, at manufacturing the wireless device. Alternatively or in addition, the different CSI configurations may be received and/or updated during operation of the wireless device, e.g., from the radio node and/or the RAN.

The step of determining the CSI state may be implemented by or may include transitioning (i.e. switching) the wireless device to the CSI state according to the determined state transition.

The step of reporting the CSI may comprise at least one of measuring the CSI, gathering or measuring one or more measurands underlying the CSI, evaluating CSI as a function of the measurands and transmitting the CSI. The reporting of the CSI may be different in the different CSI states according to the different CSI configurations associated with the respective CSI states. The reporting may be different in at least one of gathering the CSI at the wireless device, the content of the CSI and transmitting the CSI to the radio node and/or the RAN.

The CSI may be selectively reported according to the CSI configuration that is associated with the CSI state. Particularly, transmitting the CSI may be triggered or may be not triggered according to the CSI configuration.

The at least one transition criterion may comprise one or more criteria that are specific for one or more of the CSI states. Alternatively or in addition, the at least one transition criterion may comprise one or more global transition criteria.

For each of the CSI states, the associated CSI configuration may comprise at least one of two different types of information. A first type among the types of information may comprise the corresponding transition criterion (also referred to as state-transition triggers). The first type of information may be used by the wireless device in the determining step. A second type among the types of information may comprise parameters for the reporting of the CSI (also referred to as CSI-reporting rules). The second type of information may be used by the wireless device in the reporting step.

The step of determining the state transition to the CSI state may include determining, by the wireless device, for each of one or more of the CSI states whether the transition criterion for the state transition to the corresponding CSI state is fulfilled. The step of determining the state transition may include assessing the transition criterion for those CSI states that have a state transition originating from a current CSI state. The CSI state for which the transition criterion is fulfilled may be determined.

The transition criterion may depend on a current CSI state among the CSI states. The determined CSI state may be different from the current CSI state. The transition criterion for a transition from the current CSI state to another CSI state may depend on both the current CSI state (also referred to as source CSI state) and the other CSI state (also referred to as target CSI state). That is, the step of determining may include determining, by the wireless device, whether the transition criterion for a transition from the current CSI state among the CSI states to the other CSI state among the CSI states is fulfilled.

The wireless device may transition from a first CSI state to a second CSI state. The step of determining may include or trigger transitioning from the first CSI state among the CSI states to the second CSI state (e.g., as the determined CSI state) if the transition criterion for the state transition from the first CSI state to the second CSI state is fulfilled. Before the transitioning, the wireless device may, in the first CSI state, perform CSI reporting according to a first CSI configuration associated with the first CSI state (e.g., as the current CSI state). After the transitioning, the wireless device may, in the second CSI state, perform CSI reporting according to a second CSI configuration associated with the second CSI state (e.g., as the current CSI state).

The CSI states include at least one active CSI state. For example, the active state may be a state within a radio resource control (RRC) connected state (RRC_CONNECTED state). The active state may encompass a situation when the wireless device has not been receiving and/or transmitting data for a certain time and is still RRC_CONNECTED.

The wireless device in the active state periodically reports the CSI according to the CSI configuration associated with the active CSI state. The CSI configuration associated with the active CSI state may be indicative of a periodicity for the reporting of the CSI. The active CSI state may also be referred to as an active CSI-reporting state.

In the active state, the wireless device may report the CSI according to a conventional periodic CSI. The periodic reporting of the CSI may be combined with further reporting modes, e.g., reporting the CSI upon request and/or event-driven reporting of the CSI.

The technique may be implemented as a method of conditionally reporting periodic CSI reports. The periodic CSI reporting may be conditional in that the condition for the wireless device being in the active state is fulfilled.

In the active CSI state of the wireless device, the CSI may be reported on a physical uplink control channel (PUCCH) and/or multiplexed with data on a physical uplink shared channel (PUSCH) of the RAN. According to the transition criteria, the wireless device may be in the active CSI state only if the CSI is used by the radio node and/or the RAN or is useful for the radio node and/or the RAN.

The transition criterion for the transition to the active state may include at least one of an arrival of uplink data and a reception of downlink data. Alternatively or in addition, the transition criterion for the transition to the active state includes a change of the CSI.

The CSI states may include at least one inactive CSI state. The CSI configuration associated with the inactive state may be different from the CSI configuration associated with the active state. The inactive CSI state may also be referred to as a non-active CSI state. The inactive CSI state may be related to an inactivity of a data communication (e.g., uplink, downlink and/or sidelink) between the wireless device and the radio node and/or the RAN.

The CSI may be reported more frequently in the active state than in the inactive CSI state. In one embodiment, the CSI may be periodically reported according to the CSI configuration associated with the inactive CSI state. The CSI configuration associated with the inactive CSI state may be indicative of a periodicity for the reporting of the CSI, which is longer than the periodicity of the active state.

Moreover, in one embodiment, the wireless device may refrain from periodically reporting the CSI in the inactive CSI state. For example, the inactive CSI state does not preclude aperiodic (e.g., requested) CSI reports.

In same or further embodiments, the wireless device may autonomously trigger CSI reports in the inactive CSI state. The reporting may be autonomously performed by the wireless device in that the transmission of the report is triggered or controlled by the wireless device. For example, autonomously reporting may encompass any reporting that is not triggered by a CSI request from the radio node and/or the RAN. Alternatively or in addition, the autonomous reporting may encompass periodically transmitting CSI reports and/or transmitting one or more CSI reports that are triggered by an event (e.g., a measurement) at the wireless device. The CSI may be reported responsive to events or results of measurements as defined by the CSI configuration associated with the inactive CSI state.

The reporting of the CSI by the wireless device in the inactive state may be triggered by a request received from the radio node and/or the RAN. For example, the CSI may be reported by the wireless device only upon request by the radio node and/or the RAN in the inactive state. The request may relate to a single CSI report or an aperiodic CSI report.

The reporting of the CSI by the wireless device in the inactive state may be triggered by an event according to the CSI configuration associated with the inactive CSI state. The event may be an event occurring at the wireless device and/or detected by the wireless device.

For example, the reporting of the CSI by the wireless device in the inactive state may be triggered by a change of the CSI according to the CSI configuration associated with the inactive CSI state. The change of the CSI may include or may be caused by a change of a measurand underlying the CSI or any other parameter influencing the CSI. The change of the CSI may include a change of at least one of a reference signal received power (RSRP), a channel quality indicator (CQI), a signal-to-noise ratio (SNR), and a precoding matrix index (PMI).

The triggered reporting may include a step of obtaining a radio resource of the radio node and/or the RAN for transmitting the CSI. The radio resource may be obtained by transmitting a scheduling request to the radio node and/or the RAN or by accessing a shared uplink radio resource of the radio node and/or the RAN. The uplink radio resource of the radio node and/or the RAN may be shared among multiple wireless devices. Accessing the shared uplink radio resource may include a listen before talk (LBT) process.

The transition criterion for the transition to the inactive state may include an expiry of a timer at the wireless device. The timer may be indicative of the time elapsed since the latest transmission of data from the wireless device and/or the latest reception of data at the wireless device. The timer may be reset upon at least one of arrival of uplink data and reception of downlink data.

A status of a buffer at the wireless device or a scheduling grant from the radio node and/or the RAN may be indicative of the arrival. Alternatively or in addition, the downlink data may be received from the radio node and/or the RAN or a scheduling assignment from the radio node and/or the RAN may be indicative of the reception.

The method may further comprise a step of performing a deep packet inspection (DPI) or a stateful packet inspection (SPI) of at least one of the uplink data and the downlink data. An expected arrival or an expected reception of data, e.g., an acknowledgment message, may be indicative of the arrival or the reception.

The method may further comprise a step of performing a measurement for the CSI based on reference signals (RSs) for the CSI. The change of the CSI may relate to a change in, or a change detected based on, the CSI resulting from the CSI measurement. The RS for the CSI may comprise at least one of CSI-RSs and demodulation RSs (DM-RSs).

The wireless device may measure the CSI based on the RS. The radio node and/or the RAN may transmit the RS independently of the CSI state of the wireless device.

The change may include at least one of a change in a newly evaluated CSI compared to at least one of a previously evaluated CSI and a previously reported CSI. The comparison may be based on a difference between the newly evaluated CSI and the previously evaluated or reported CSI. The change may trigger the CSI reporting if the difference exceeds a relative threshold. Alternatively or in addition, the change may trigger the CSI reporting if the newly evaluated CSI exceeds an absolute CSI threshold.

The method may further comprise a step of receiving at least one configuration message from the radio node and/or the RAN. The at least one configuration message may comprise or may be indicative of one or more or all of the CSI configurations associated with the CSI states of the wireless device or an update thereof. The same or a further one of the at least one configuration message may comprise or may be indicative of a control command controlling the wireless device to perform the method or at least the determining step.

The received control command may control (e.g., instruct) the wireless device to perform at least the determining step and the reporting step. Alternatively or in addition, the received CSI configurations may be stored at the wireless device according to the storing step. For example, the received CSI configurations may augment, replace or update the stored CSI configurations.

The method may further comprise a step of receiving, from the radio node and/or the RAN, the configuration message or a further configuration message, which comprises or is indicative of the transition criterion for at least one of the CSI states stored or to be stored at the wireless device.

The radio node and/or the RAN may semi-persistently schedule radio resources (e.g., shared radio resources) to the wireless device for the CSI reporting. The radio resources may be shared by multiple wireless devices connected or connectable to the radio node and/or the RAN.

The reporting of the CSI may include transmitting the CSI on a shared radio resource of the radio node and/or the RAN. The method may further comprise a step of receiving a scheduling grant responsive to a collision on the shared radio resource. The method may further comprise a step of retransmitting the CSI according to the scheduling grant.

The technique (e.g., according to the one method aspect) may be implemented at the wireless device. The wireless device may perform the method. The wireless device may encompass any station that is configured for wirelessly accessing the radio access node or the RAN.

As to another aspect, a method of receiving channel state information (CSI) from a wireless device at a radio node providing radio access to the wireless device is provided. The method comprises a step of transmitting at least one configuration message to the wireless device. The at least one configuration message comprises or is indicative of different CSI configurations associated with different CSI states of the wireless device. The CSI states include at least one active CSI state. According to the CSI configuration associated with the active CSI state, the CSI is periodically reported by the wireless device in the active state. The CSI configurations comprise at least one transition criterion for a state transition between the CSI states. The transition criterion for the transition to the active state includes a change of the CSI. The method further comprises a step of receiving the CSI according to the CSI configuration that is associated with the CSI state resulting from the determination, by the wireless device, of the state transition to the CSI state among the CSI states if the corresponding transition criterion is fulfilled based on the CSI configuration stored at the wireless device.

The at least one configuration message may comprise or may be indicative of a control command controlling the wireless device to determine the state transition to the CSI state among the CSI states if the corresponding transition criterion is fulfilled based on the CSI configurations stored at the wireless device.

The control command may control the wireless device to perform the one method aspect.

The configuration message may comprise only the control command and/or may not comprise the CSI configurations. The CSI configurations may already be stored at the wireless device when the configuration message (e.g., the control command) is transmitted. For example, the CSI configurations may have been transmitted beforehand to the wireless device or may have been installed at the wireless device at manufacturing the wireless device.

Alternatively or in addition, the configuration message may comprise only the CSI configurations and/or may not comprise the control command. The configuration message may comprise the CSI configurations as an update of previously transmitted CSI configurations. The configuration message comprising the different CSI configurations may be implemented by an incremental update of the different CSI configurations stored at the wireless device. Alternatively or in addition, the different CSI configurations may be transmitted in multiple messages, each comprising a portion of the different CSI configurations.

Moreover, transmitting the CSI configurations may imply the control command. For example, the wireless device may be controlled to determine the state transition by the configuration message comprising at least one transition criterion for the state transition between the CSI states.

Furthermore, the CSI states may be implicitly defined by the CSI configurations. For example, each CSI configuration may define one of the CSI states.

The other method aspect may further comprise any feature or step that is disclosed in the context of the one method aspect, or a corresponding feature or a corresponding step. For example, the CSI may be received on a shared radio resource of the radio node (e.g., the radio access node) or the RAN. The method may further comprise a step of detecting a collision on the shared radio resource. The method may further comprise a step of transmitting a scheduling grant responsive to the detected collision on the shared radio resource. The method may further comprise a step of receiving the CSI according to the scheduling grant.

Furthermore, the triggered reporting may include the step of granting a radio resource to the wireless device for transmitting the CSI. When an event is triggered by an arrival of data at the wireless device, a status of a buffer at the wireless device, a reception of a scheduling request from the wireless device and/or a scheduling grant from the radio access node may be indicative of the arrival of data at the wireless device. When an event is triggered by a reception of data at the wireless device, the transmission of downlink data by the radio node or a scheduling assignment from the radio node may be indicative of the reception.

The control command may further control a step of performing a deep packet inspection (DPI) or a stateful packet inspection (SPI) of at least one of the uplink data and the downlink data. An arrival or reception (e.g., of an acknowledgment message) expected based on the DPI or SPI may be indicative of the arrival or the reception. Alternatively or in addition, the control command may further control a step of performing a measurement for the CSI based on RS for the CSI.

The transmission from the radio node to the wireless device may apply a radio configuration that depends on the CSI. As long as the radio node has not received a report from the wireless device, the radio node may apply a radio configuration that is based on a previously reported CSI. Optionally, the radio node may apply a radio configuration that assumes that the current CSI is within a limit, e.g., relative to the previously received CSI. The limit may correspond to, or may be consistent with, the relative or absolute thresholds defined by the CSI configuration for triggering a CSI report. For example, the radio node may assume that the quality of the channel has not dropped by more than the relative threshold and/or not below the absolute threshold.

The technique (e.g., according to the other method aspect) may be implemented at the radio node and/or the RAN. The radio access node or a cell of the RAN may perform the method. The radio access node may encompass any station that is configured to provide radio access to the wireless device. Alternatively, the technique (e.g., according to the other method aspect) may be implemented at another wireless device. The other wireless device may perform the method, e.g., for a device-to-device (D2D) communication, particularly for a vehicle-to-vehicle (V2V) communication. For example, the other wireless access node may perform the function of the "radio access node" at least as far as required for the subject technique. Particularly, the "uplink" and the "downlink" may be implemented by a link from the wireless device to the other wireless device and vice versa, respectively.

In any aspect, the radio access node or the cell of the RAN may serve a plurality of wireless devices, e.g., a plurality of embodiments of the wireless device performing the one method aspect. The wireless device may be configured for peer-to-peer communication (e.g., on a sidelink) and/or for accessing the RAN (e.g. for uplink, UL, and/or downlink, DL, communication).

The wireless device may be a terminal, a user equipment (UE, e.g., a 3GPP UE), a mobile or portable station (STA, e.g. a Wi-Fi STA), a device for machine-type communication (MTC), a narrowband Internet of Things (NB-loT) device or a combination thereof. Examples for the UE and the mobile station include a mobile phone and a tablet computer. Examples for the portable station include a laptop computer and a television set. Examples for the MTC device and the NB-loT device include robots, sensors and/or actuators, e.g., in manufacturing, automotive communication and home automation. The MTC device or the NB loT device may be implemented in household appliances and consumer electronics. Examples for the MTC device or the combination include a self-driving vehicle, a door intercommunication system and an automated teller machine.

Examples for the radio access node may include a 3G base station or Node B, 4G base station or eNodeB, a 5G base station or gNodeB, an access point (e.g., a Wi-Fi access point) and a network controller (e.g., according to Bluetooth, ZigBee or Z-Wave).

The RAN may be implemented according to the Global System for Mobile Communications (GSM), the Universal Mobile Telecommunications System (UMTS), Long Term Evolution (LTE) and/or New Radio (NR).

The technique may be implemented on a Physical Layer (PHY), a Medium Access Control (MAC) layer, a Radio Link Control (RLC) layer and/or a Radio Resource Control (RRC) layer of a protocol stack for the radio communication.

According to a still further aspect, a method of reporting channel state information (CSI) from one wireless device to another wireless device is provided. The wireless devices are wirelessly connected or connectable to each other. The method comprises a step of storing, at the one wireless device, different CSI configurations associated with different CSI states. The CSI states include at least one active CSI state. According to the CSI configuration associated with the active CSI state, the CSI is periodically reported by the wireless device in the active state. The CSI configurations comprise at least one transition criterion for a state transition between the CSI states. The transition criterion for the transition to the active state includes a change of the CSI. The method further comprises a step of determining, by the one wireless device, the state transition to a CSI state among the CSI states if the corresponding transition criterion is fulfilled. The method further comprises a step of reporting the CSI according to the CSI configuration that is associated with the CSI state resulting from the determination.

According to a still further aspect, a method of receiving channel state information (CSI) from one wireless device at another wireless device is provided. The method comprises a step of transmitting at least one configuration message to the one wireless device. The at least one configuration message comprises or is indicative of at least one of different CSI configurations associated with different CSI states of the one wireless device. The CSI states include at least one active CSI state. According to the CSI configuration associated with the active CSI state, the CSI is periodically reported by the wireless device in the active state. The CSI configurations comprise at least one transition criterion for a state transition between the CSI states. The transition criterion for the transition to the active state includes a change of the CSI. The method further comprises a step of receiving the CSI according to the CSI configuration that is associated with the CSI state resulting from the determination, by the wireless device, of the state transition to the CSI state among the CSI states if the corresponding transition criterion is fulfilled based on the CSI configuration stored at the wireless device.

The at least one configuration message may comprise or may be indicative of a control command controlling the one wireless device to determine the state transition to a CSI state among the CSI states if the corresponding transition criterion is fulfilled based on the CSI configurations stored at the wireless device.

The aforementioned aspects may be referred to as device-to-device (D2D) aspects. Any of the D2D aspects may further comprise any feature or step that is disclosed in the context of the one method aspect or the other method aspect, or a feature or step corresponding thereto.

As to another aspect, a computer program product is provided. The computer program product comprises program code portions for performing any one of the steps of the method aspects disclosed herein when the computer program product is executed by one or more computing devices. The computer program product may be stored on a computer-readable recording medium. The computer program product may also be provided for download via a data network, e.g., via the RAN, via the Internet and/or by the radio node. Alternatively or in addition, the method may be encoded in a Field-Programmable Gate Array (FPGA) and/or an Application-Specific Integrated Circuit (ASIC), or the functionality may be provided for download by means of a hardware description language.

As to one device aspect, a device for reporting channel state information (CSI) from a wireless device to a radio node is provided. The wireless device is wirelessly connected or connectable to the radio node. The device is configured to store, at the wireless device, different CSI configurations associated with different CSI states. The CSI states include at least one active CSI state. According to the CSI configuration associated with the active CSI state, the CSI is periodically reported by the wireless device in the active state. The CSI configurations comprise at least one transition criterion for a state transition between the CSI states. The transition criterion for the transition to the active state includes a change of the CSI. The device is further configured to determine, by the wireless device, the state transition to a CSI state among the CSI states if the corresponding transition criterion is fulfilled; and to report the CSI according to the CSI configuration that is associated with the CSI state resulting from the determination.

As to another device aspect, a device for receiving channel state information (CSI) from a wireless device at a radio node providing radio access to the wireless device is provided. The device is configured to transmit at least one configuration message to the wireless device. The at least one configuration message comprising or being indicative of at least one of different CSI configurations associated with different CSI states of the wireless device. The CSI states include at least one active CSI state. According to the CSI configuration associated with the active CSI state, the CSI is periodically reported by the wireless device in the active state. The CSI configurations comprise at least one transition criterion for a state transition between the CSI states. The transition criterion for the transition to the active state includes a change of the CSI. The device is further configured to receive the CSI according to the CSI configuration that is associated with the CSI state resulting from the determination, by the wireless device, of the state transition to the CSI state among the CSI states if the corresponding transition criterion is fulfilled based on the CSI configuration stored at the wireless device.

The device may be configured to transmit a control command controlling the wireless device to determine the state transition to a CSI state among the CSI states if the corresponding transition criterion is fulfilled based on the CSI configurations stored at the wireless device.

According to an exemplary embodiment not falling within the scope of the claims, a device for reporting channel state information (CSI) from a wireless device to a radio node is provided. The wireless device is wirelessly connected or connectable to the radio node. The device comprising at least one processor and a memory, said memory comprising instructions executable by said at least one processor, whereby the device is operative to store, at the wireless device, different CSI configurations associated with different CSI states, wherein the CSI configurations comprise at least one transition criterion for a state transition between the CSI states; to determine, by the wireless device, the state transition to a CSI state among the CSI states if the corresponding transition criterion is fulfilled; and to report the CSI according to the CSI configuration that is associated with the CSI state resulting from the determination.

According to a further exemplary embodiment not falling within the scope of the claims, a device for receiving channel state information (CSI) from a wireless device at a radio node providing radio access to the wireless device is provided. The device comprising at least one processor and a memory, said memory comprising instructions executable by said at least one processor, whereby the device is operative to transmit at least one configuration message to the wireless device. The at least one configuration message comprising or being indicative of at least one of different CSI configurations associated with different CSI states of the wireless device, wherein the CSI configurations comprise at least one transition criterion for a state transition between the CSI states; and a control command controlling the wireless device to determine the state transition to a CSI state among the CSI states if the corresponding transition criterion is fulfilled based on the CSI configurations stored at the wireless device. The device is operative to receive the CSI according to the CSI configuration that is associated with the CSI state resulting from the determination.

According to a still further exemplary embodiment not falling within the scope of the claims, a system comprising at least two devices for reporting CSI and receiving CSI, respectively, according to any of the aforementioned aspects is provided.

The devices (or any node or station for embodying the technique) may further include any feature disclosed in the context of the method aspects. Particularly, any one of the units and modules, or a dedicated unit or module, may be configured to perform one or more of the steps of any one of the method aspects.

### Brief Description of the Drawings

Further details of example embodiments of the technique are described with reference to the enclosed drawings, wherein:
- Fig. 1: shows a schematic block diagram of a device for reporting channel state information;
- Fig. 2: shows a schematic block diagram of a device for receiving channel state information;
- Fig. 3: shows a flowchart for a method of reporting channel state information, which is implementable by the device of Fig. 1;
- Fig. 4: shows a flowchart for a method of receiving channel state information, which is implementable by the device of Fig. 2;
- Fig. 5: shows an example schematic state diagram of the device of Fig. 1;
- Fig. 6: shows an example schematic second signaling diagram for a RAN including a device of Fig. 1;
- Fig. 7: schematically illustrates an example time sequence resulting from an implementation of the method of Fig. 3;
- Fig. 8: shows a schematic block diagram of a first embodiment of the device of Fig. 1;
- Fig. 9: shows a schematic block diagram of a second embodiment of the device of Fig. 1;
- Fig. 10: shows a schematic block diagram of a first embodiment of the device of Fig. 2; and
- Fig. 11: shows a schematic block diagram of a second embodiment of the device of Fig. 2.

### Detailed Description

In the following description, for purposes of explanation and not limitation, specific details are set forth, such as a specific network environment in order to provide a thorough understanding of the technique disclosed herein. It will be apparent to one skilled in the art that the technique may be practiced in other embodiments that depart from these specific details. Moreover, while the following embodiments are primarily described for a 5G New Radio (NR) implementation, it is readily apparent that the technique described herein may also be implemented in any other radio network, including 3GPP LTE or a successor thereof, Wireless Local Area Network (WLAN) according to the standard family IEEE 802.11, Bluetooth according to the Bluetooth Special Interest Group (SIG), particularly Bluetooth Low Energy and Bluetooth broadcasting, and/or ZigBee based on IEEE 802.15.4.

Moreover, those skilled in the art will appreciate that the functions, steps, units and modules explained herein may be implemented using software functioning in conjunction with a programmed microprocessor, an Application Specific integrated Circuit (ASIC), a Field Programmable Gate Array (FPGA), a Digital Signal Processor (DSP) or a general purpose computer, e.g., including an Advanced RISC Machine (ARM). It will also be appreciated that, while the following embodiments are primarily described in context with methods and devices, the invention may also be embodied in a computer program product as well as in a system comprising at least one computer processor and memory coupled to the at least one processor, wherein the memory is encoded with one or more programs that may perform the functions and steps or implement the units and modules disclosed herein.

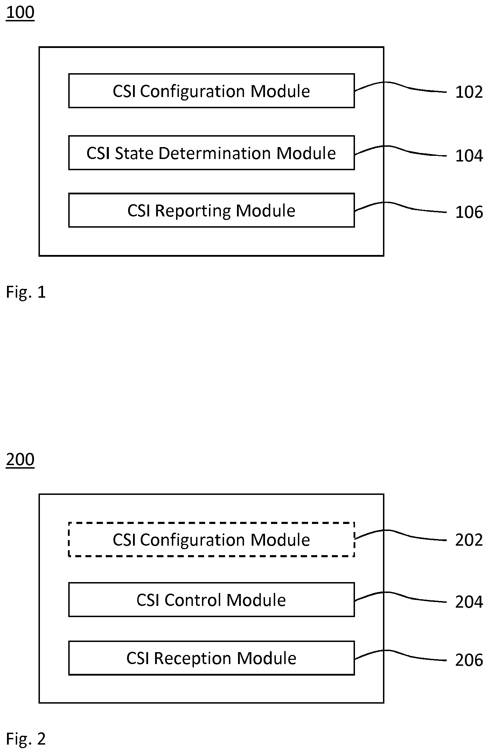

Fig. 1 schematically illustrates a block diagram of a device for reporting channel state information (CSI) from a wireless device to a radio node, e.g., another wireless device and/or a radio access network (RAN) or a radio access node thereof. The wireless device is wirelessly connected or connectable to the RAN. The device is generically referred to by reference sign 100.

The device 100 comprises a CSI configuration module 102 that stores, at the wireless device, different CSI configurations associated with different CSI states. The CSI configurations comprise at least one transition criterion for a state transition between the CSI states. The device 100 further comprises a CSI state determination module 104 that determines, by the wireless device, the state transition to a CSI state among the CSI states if the corresponding transition criterion is fulfilled. The device 100 further comprises a CSI reporting module 106 that reports the CSI according to the CSI configuration that is associated with the CSI state resulting from the determination.

The device 100 may be connected to and/or part of the wireless device. The device 100 may be embodied by or at the wireless device, a station connected to the wireless device or a combination thereof.

Any of the modules of the device 100 may be implemented by units configured to provide the corresponding functionality.

Fig. 2 schematically illustrates a block diagram of a device for receiving CSI from a wireless device at a radio node that provides radio access to the wireless device. The wireless device may be wirelessly connected or connectable to the radio node of a RAN. The device is generically referred to by reference sign 200.

Optionally, the device 200 comprises a CSI configuration module 202 that transmits at least one configuration message to the wireless device. The at least one configuration message comprises or is indicative of different CSI configurations associated with different CSI states of the wireless device. The CSI configurations comprise at least one transition criterion for a state transition between the CSI states.

Alternatively or in addition, the device 200 comprises a CSI control module 204 that transmits at least one configuration message to the wireless device. The at least one configuration message comprises or is indicative of a control command controlling the wireless device to determine the state transition to a CSI state among the CSI states if the corresponding transition criterion is fulfilled based on the CSI configurations, which are stored at the wireless device.

The modules 202 and 204 may be implemented by one module. Alternatively or in addition, the CSI configurations and the control command may be transmitted by the same at least one control message.

The device 200 further comprises a CSI reception module 206 that receives the CSI according to the CSI configuration associated with the CSI state resulting from the determination.

The device 200 may be connected to and/or part of the RAN or a core network (CN) connected to the RAN. The device 200 may be embodied by or at the radio access node (e.g., a base station) of the RAN, one or more nodes connected to the RAN for controlling the radio access node or a combination thereof.

Any of the modules of the device 200 may be implemented by units configured to provide the corresponding functionality.

In the context of any embodiment of the devices 100 and 200, the radio access node may encompass a network controller (e.g., a Wi-Fi access point) or a cellular base station (e.g. a 3G Node B, a 4G eNodeB or a 5G gNodeB) of the RAN. Alternatively or in addition, the one or more wireless devices may include a mobile or portable station or a radio device connectable to the RAN. Each wireless device may be a user equipment (UE), a device for machine-type communication (MTC) and/or an loT device.

Furthermore, two or more wireless devices may be configured to wirelessly connect to each other, e.g., in an ad-hoc radio network or via 3GPP sidelink. At least one of the wireless devices may embody the device 100. At least one other wireless device may embody the device 200, e.g., in the role of the radio access node. Particularly, both the device 100 and the device 200 may be UEs. The one wireless device embodying the device 100 may report the CSI for 3GPP sidelink or Cellular Vehicle-to-Everything (V2X) communication to the other wireless device embodying the device 200.

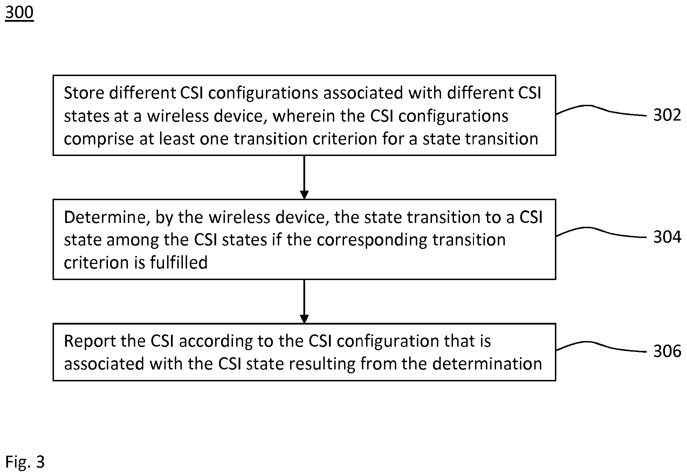

Fig. 3 shows a flowchart for a method 300 of reporting CSI from a wireless device to a radio node, e.g., another radio device or a radio access node of a RAN. The wireless device is wirelessly connected or connectable to the radio node, e.g., to the RAN. The method comprises or triggers a step 302 of storing, at the wireless device, different CSI configurations associated with different CSI states. The CSI configurations comprise at least one transition criterion for a state transition between the CSI states. In a step 304, the wireless device determines the state transition to a CSI state among the CSI states if the corresponding transition criterion is fulfilled. The CSI is reported according to the CSI configuration that is associated with the CSI state resulting from the determination in a step 306 of the method 300.

The method 300 may be performed by the device 100, e.g., at or using the wireless device. For example, the modules 102, 104 and 106 may perform the steps 202, 204 and 206, respectively.

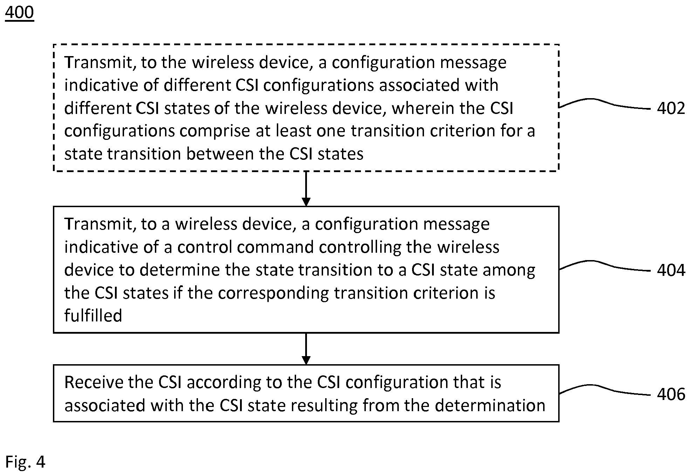

Fig. 4 shows a flowchart for a method 400 of receiving CSI from a wireless device at a radio node (e.g., another radio device or a radio access node that provides radio access to the wireless device). The method comprises or triggers an optional step 402 of transmitting at least one configuration message to the wireless device. The at least one configuration message comprises or is indicative of different CSI configurations associated with different CSI states of the wireless device. The CSI configurations comprise at least one transition criterion for a state transition between the CSI states. Alternatively or in addition, at least one configuration message is transmitted to the wireless device in a step 404, wherein the at least one configuration message comprises, is indicative of, or implies a control command controlling the wireless device to perform any of the steps of the method 300, e.g., to determine the state transition to a CSI state among the CSI states if the corresponding transition criterion is fulfilled based on the CSI configurations stored at the wireless device. In a step 406 of the method 400, the CSI is received according to the CSI configuration that is associated with the CSI state resulting from the determination.

The method 400 may be performed by the device 200, e.g., at or using the radio access node of the RAN. For example, the modules 202, 204 and 206 may perform the steps 402, 404 and 406, respectively.

Embodiments of the technique can maintain compatibility with the CSI reporting according to the document 3GPP TS 38.214, Release 15 or Version 1.2.0 (e.g., Section 5.2 therein), at least in one of an active CSI state and an inactive CSI state.

The technique may be embodied as a state-based CSI reporting, wherein the UE reports the CSI in the step 306 based on its current CSI state. The network (e.g., the RAN, the CN and/or node thereof) may configure the UE in the step 402 with the CSI configurations including transition criteria (also referred to as state-transition triggers or state-transition trigger criteria) and/or the CSI configurations including different CSI-reporting rules for the different CSI states.

In a first embodiment, the CSI-reporting rules may comprise a CSI configuration for periodic CSI reporting. For example, the UE may be configured with a first periodic CSI configuration for a first CSI state and a second periodic CSI configuration for a second CSI state. A longer period may be defined by the second CSI configuration for the second CSI state as compared to the first CSI configuration for the first CSI state. Optionally, the CSI reporting in the first CSI state and the second CSI state perform the same CSI process at different reporting rates (e.g., periodicities or frequencies). The first CSI configuration may be used when there is downlink or uplink data traffic. The second CSI configuration may be used in an idle mode of the wirelesses device and/or when there has not been any data traffic for a certain time.

In a second embodiment, which is combinable with the first embodiment, the CSI states for the UE may comprise an active CSI state, in which the UE uses a first CSI-reporting rule included in a first CSI configuration associated with the active state. The CSI states for the UE further comprise a non-active (or inactive) CSI state, in which the UE uses a second CSI-reporting rule included in a second CSI configuration associated with the non-active state.

The CSI configurations further comprise state-transition trigger criteria. For the state transition from the active CSI state to the non-active CSI state, the transition criterion may include: the state transition is determined in the step 304, if no data has been received and/or transmitted for a certain time, e.g., for *x* transmission time intervals (TTIs). For the state transition from the non-active CSI state to the active CSI state, the transition criterion may include: the state transition is determined in the step 304, if downlink data is received and/or uplink data arrives in a buffer at the wireless device.

In one implementation of the first or second embodiment, the second CSI configuration comprises an event-based CSI reporting configuration, wherein the CSI is reported if (e.g., only if) one or more event-triggers are fulfilled. The one or more event-triggers may comprise a significant change of the CSI (e.g., as obtained at the wireless device). That is, the CSI is reported in the step 306 when the CSI has changed significantly. The change of the CSI may be significant relative to the last-reported CSI, and/or the change may include exceeding or falling below one or more threshold values.

For example, with a threshold event, such as a reference signal received power (RSRP) and/or a channel quality indication (CQI) being below a certain threshold, the UE only needs to report the CSI when the CSI is needed, rather than in a periodical manner or requested by the network.

Alternatively or in addition, the one or more event-triggers may comprise reception of a CSI request at the wireless device from the RAN. The CSI request may trigger an individual CSI report to the RAN.

In another implementation of the first or second embodiment that is combinable with the one implementation, the second CSI configuration is a periodic CSI configuration (i.e., the CSI-reporting rule requires period CSI reports) with a long periodicity (e.g., longer than a periodicity of the first CSI configuration). In any implementation, the second CSI configuration may allow the RAN to keep track of the UE or its radio channel (e.g., at a basic level of accuracy).

Embodiments or implementations of the technique allow a significant reduction of the overhead caused by the CSI reporting, without losing track of the UE, e.g., during periods of time when no data transmission is ongoing while the UE is still in active mode.

The switch to the event-based reporting (e.g., to the inactive CSI state) is determined in the step 304 based on the corresponding transition criterion without any additional signaling from the RAN, e.g., without additional radio resource control (RRC) signaling for reconfiguration of the UE. When data is being transmitted, the UE may switch back to the periodical reporting (e.g., to the active CSI state) in the step 304 based on the corresponding transition criterion without additional signaling from the RAN, e.g., without RRC signaling for reconfiguration of the UE.

In any embodiment or implementation, at configuration of a CSI process, e.g., by means of a control command, the radio access node (e.g., the base station serving the UE as the wireless device) may order the wireless device to perform state transitions according to the step 304, e.g., between the active and non-active CSI states defining the reporting of the CSI in the step 306. The state transitions are based on state-transition trigger criteria (or briefly: transition criteria). The device 100, e.g. the wireless device, may be implemented as a multi-state machine comprising the CSI states and performing the state transitions according to the transition criteria. For example, the UE may be in one of two CSI states, and state transitions can occur due to the state-transition triggers.

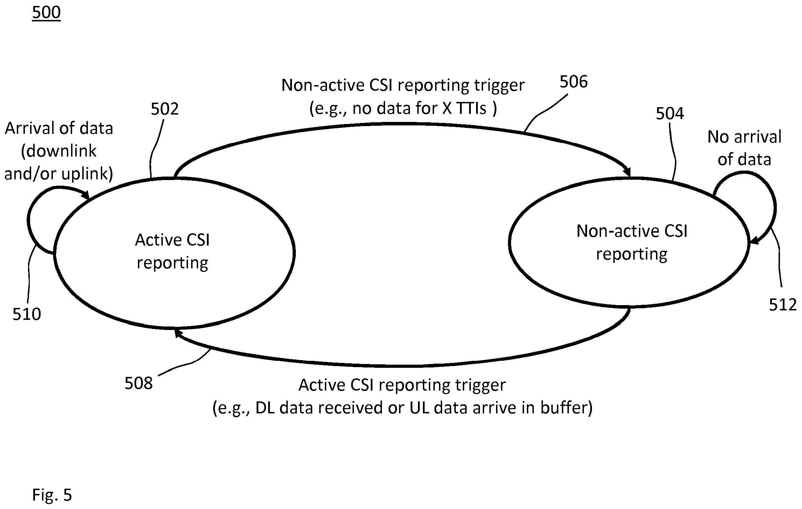

Fig. 5 shows an example schematic state diagram 500 of the device 100, e.g., of the wireless device. By way of example and not limitation, Fig. 5 illustrates state transitions 506 and 508 between an active CSI state 502 and a non-active CSI state 504.

The active CSI state 502 may comprise a periodic CSI reporting and/or an aperiodic CSI reporting. The active CSI state 502 may be compatible with, or may correspond to, an existing or conventional CSI mode. The non-active CSI state 504 may comprise at least one of requested (e.g., aperiodic) CSI reporting, event-based CSI reporting and long-periodic CSI reporting.

The state transitions and the corresponding transition criteria (also referred to as state-transition trigger criteria) may comprise one or more of the following examples. A first example of a transition criterion includes expiry of a timer, e.g. as schematically illustrated at reference sign 506. The timer may represent the time since the last DL data transmission from the radio access node and/or the last scheduling assignment by the radio access node. A second example of a transition criterion includes one or more events at the wireless device, e.g., as illustrated at reference sign 508. The one or more events may comprise a change of a buffer status of an UL data buffer or a DL data buffer, a change in a session status of a session or link between the wireless device and the radio access node (e.g., on a higher layer of a communication protocol), and/or the change of the obtained CSI.

A third example of a transition criterion includes an arrival (or an availability) of UL data, e.g. as schematically illustrated at reference sign 508. The arrival or availability of UL data may imply that the CSI is useful for the radio access node (e.g., for precoding a DL transmission), e.g., since DL data needs to be sent for a transfer control protocol (TCP) acknowledge (ACK) and/or a radio link control (RLC) ACK (e.g., within few TTls). In general, the arrival of UL data may transfer the wireless device to the active CSI state 502 in the step 304, since UL data transmissions typically imply upcoming DL data, which increases the need or is the reason for the need for an accurate CSI. The third example of the transition criterion may be based on a deep packet inspection (DPI). The DPI may determine if, for example, a TCP ACK is expected.

As schematically indicated at reference sign 510 in Fig. 5, as long as an UL or DL data transmission is (e.g., continuously) going on, periodic CSI reports with a first periodicity are transmitted according to the step 306 in the active CSI state 502 (which is also referred to as active CSI reporting state). If there has been a temporal gap without (e.g., DL) data transmission for a certain time period, x, or some other predefined trigger criterion, the UE switches to the non-active CSI state 504 (which is also referred to as non-active CSI-reporting state) according to the state transition 506. The non-active CSI state 504 is maintained as long as no UL or DL arrives, as indicated at reference sign 512.

In order to keep the terminology short, the active CSI-reporting state 502 will be referred to as *active CSI state* 502, and the non-active CSI-reporting state 504 will be referred to as *non-active CSI state* 504. In some embodiments, the non-active state 504 is an *event-based state,* wherein the CSI is reported when triggered by one or more *event triggers.* In same or other embodiments, the non-active CSI state 504 uses a periodic CSI reporting with a second periodicity that is different from the first periodicity, e.g., longer than the first periodicity.

Within the non-active state, the event triggers that trigger the CSI transmissions according to the step 306 may be based on different criteria or reference value, e.g., representing an expiration of the CSI. The event triggers may comprise one or more of the following examples.

A first example for an event trigger compares a newly evaluated CSI relative to a previously evaluated CSI. In an implementation of the first example, if the evaluated CSI falls below a threshold compared to a previous CSI evaluation, the event (i.e., the CSI report) is triggered. The first example may trigger CSI reports when the CSI (e.g., obtained by the wireless device) is changing rapidly as a function of time.

A second example for an event trigger compares a newly evaluated CSI relative to a previously reported CSI. In an implementation of the second example, if the latest CSI evaluation would have resulted in a CQI index C in a CSI report, the event may be triggered when a CQI drops D indices below C. The second example may trigger CSI reports when the CSI at the RAN (e.g., the radio access node) has become inaccurate.

A third example for an event trigger compares a newly evaluated CSI relative to an (e.g., absolute) CSI threshold. In an implementation of the third example, the event may be triggered if the CQI falls below a minimum level. The third example may trigger CSI reports when a beamwidth and/or a number of layers in the DL has to be changed by the radio access node.

While above criteria and examples have been described as CSI-reporting rule within the non-active CSI state 504, at least one of the criteria and examples may be used, alternatively or additionally, as a transition criterion, i.e., to trigger a state transition from the non-active CSI state 504 to the active CSI state 502. This state transition may cause a transmission of one or more CSI reports on the CSI reporting resource according to the step 306.

The comparison between newly and previously evaluated or reported CSI may also be formulated in the Signal to Interference plus Noise Ratio (SINR) domain. In other embodiments, the comparison may be in the spatial domain wherein preferred pre-coders for new and old CSI evaluation may be compared. For example, if the beamforming property of a new pre-coder is significantly different from an old pre-coder, the UE may enter the active state. A trigger can be a combination of listed criterions, both for the events and for the state-transitions.

When transmitting data in the DL, the radio access node may use an appropriate CQI indicated by the absence of the event-based report.

As mentioned above, for some embodiments, both the active CSI state 502 and the non-active CSI state 504 may be associated with CSI configurations for periodically reported CSI. The active CSI state 502 may be associated with a first CSI configuration for reporting the CSI with a first periodic time. The non-active CSI state 504 may be associated with a second CSI configuration for reporting the CSI with a second periodic time. The first periodic time may be less than second periodic time. In some other embodiments the non-active CSI reporting is a combination of periodic reporting and event-based reporting in the active CSI state 502 and the non-active CSI state 504, respectively. In a combination of such embodiments, in the non-active CSI state 504, the CSI is reported with the second periodic time and additionally when triggered by an event trigger.

In any embodiment or implementation, for an event-based non-active CSI state 504, some or all of the CSI-reporting triggers may be triggered only by the wireless device. It is at most the CSI configuration defining the CSI-reporting triggers which is configured by the radio access node, e.g., by means of the configuration message.

In some embodiments (e.g., including the above-mentioned embodiments) two or more wireless devices (e.g., each implementing the device 100) are assigned a shared CSI reporting resource, i.e., a radio resource for the reporting 306 of the CSI, e.g. on PUSCH or PUCCH. In such embodiments, a collision of CSI reports may occur due to two or more wireless devices triggering their transmission of a CSI report at the same time and/or on the same resource. In at least some of such embodiments, the radio access node may detect the collisions, for example, if the DM-RSs used to demodulate the CSI reports are different for the wireless devices sharing CSI reporting resources.

When a collision occurs, the radio access node may determine which wireless devices are involved in the CSI report collision and transmit UL scheduling grants to at least one or all of the determined wireless devices. For example, the UL scheduling grants may be transmitted to wireless devices that cannot be spatially separated. The UL scheduling grants define dedicated radio resources (e.g., as opposed to the shared radio resources) for each of the wireless devices to transmit its CSI report.

The scheduling of dedicated resources responsive to detecting a collision can avoid a delay caused by the wireless device having to request for such a dedicated CSI reporting resource. Alternatively or in addition, the scheduling of dedicated resources responsive to detecting a collision can require less CSI reporting resources (e.g., on PUCCH and/or PUSCH) compared to each wireless device having its own unique (i.e., dedicated) CSI reporting resources.

In any embodiment, when UL data arrives from a higher layer, the wireless device may enter the active CSI state 502 according to the step 304 and start transmitting CSI reports according to the step 306. In some of such embodiments, when a scheduling request is received at the radio access node from the wireless device indicating that the wireless device has data to transmit, the radio access node may assume that the wireless device has entered the active CSI state 502 and prepare an UL scheduling grant knowing that the wireless device will multiplex (e.g., "piggyback") a CSI report together with data in the step 306.

Any embodiment or implementation of the device 100 (e.g., the wireless device) and/or the device 200 (e.g., the radio access node) may apply one or more of the following rules as to whether or not the CSI is multiplexed with data in the step 406.

According to a first rule, when receiving the UL transmission in the step 406 responsive the transmission of a requested UL scheduling grant, the radio access node may receive the UL transmission with the assumption that the CSI is multiplexed with the data transmission. Alternatively, the radio access node may perform two decoding attempts, one attempt assuming only data and another attempt assuming data and CSI being multiplexed.

According to a second rule, an event-based CSI report is only multiplexed (e.g., "piggybacked") in the UL, if there has not been any recent multiplexed aperiodic CSI report within a time *T* or according to some other rule.

According to a third rule, the event-based CSI report is transmitted in the step 306 on a CSI reporting resource dedicated for event-based CSI reports. The radio access node may decode UL data and event-base CSI on different resources, i.e. data and CSI are multiplexed, e.g., in the frequency domain.

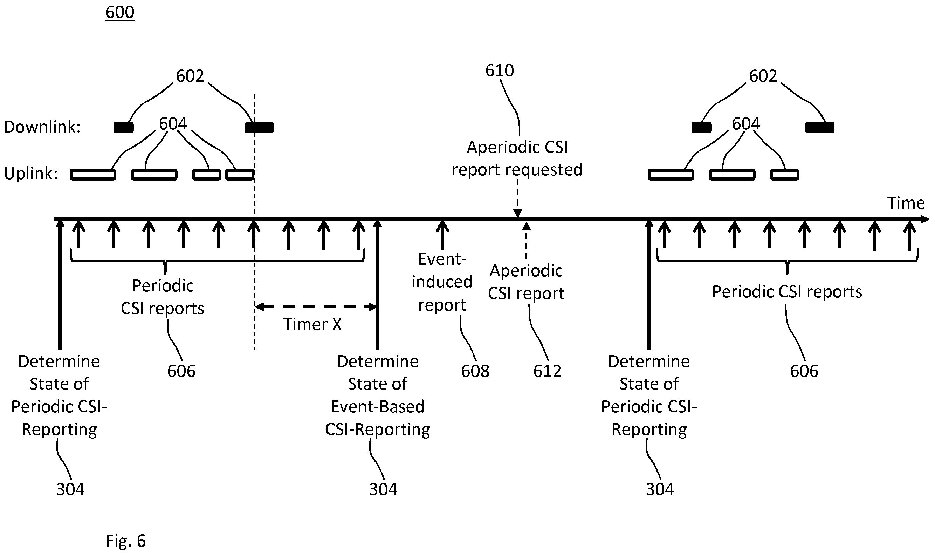

Fig. 6 schematically illustrates an example of a time sequence 600 resulting from an implementation of the method 300 at the wireless device. The reception 602 of DL data and the arrival 604 of UL data is indicated by black and white bars, respectively.

In a first instance of the step 304, the active CSI state 502 is determined, resulting in a sequence 606 of periodic CSI reports according to the step 306. The time for the state transition 506 to the non-active state is reset to zero as the last UL data is transmitted. After *x* TTIs (or a certain time), the timer expires and the wireless device transitions to the non-active CSI state 504 according to a second instance of the step 304. While in the implementation of Fig. 6 the time *x* for triggering the state transition 506 depends on the availability of UL data, variants of the implementation depend on the reception of DL data, or on both UL and DL data.

In the non-active CSI state 504, an event 608 triggers the reporting 306 of the CSI. Optionally, a CSI request 610 from the RAN triggers an aperiodic CSI report 612.

The arrival of UL data 604 triggers, in a third instance of step 304, the state transition 508 to the active CSI state 502 of the wireless device. In the active CSI state 502, the periodic reporting 306 of the CSI is resumed.

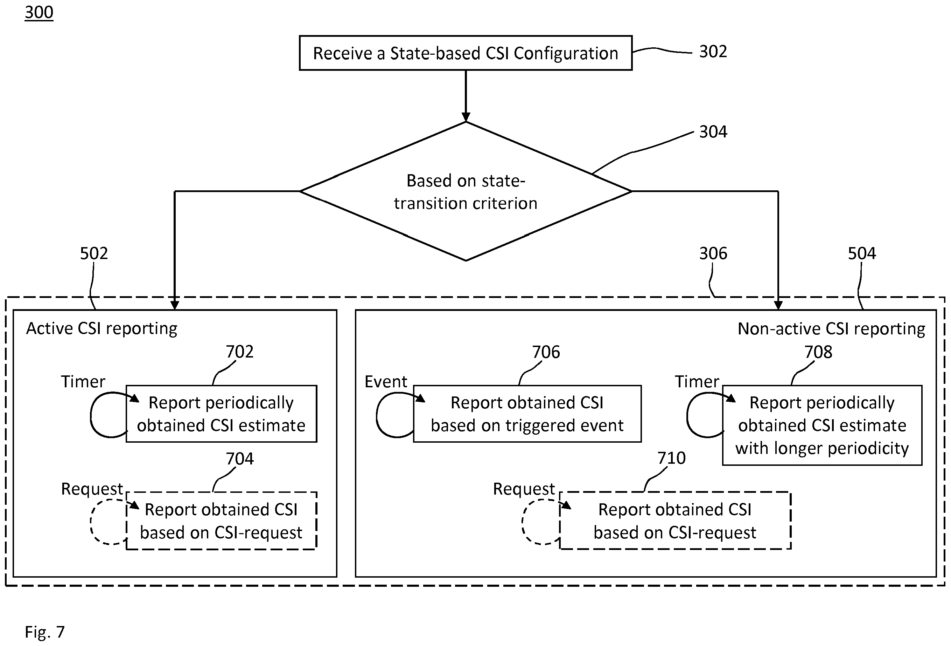

Fig. 7 schematically illustrates an example flowchart of an implementation of the method 300 at the wireless device. For example, the network side (e.g., the RAN) transmits in the step 402 only the CSI configurations that include the trigger criterion, which are stored according to the step 302. Alternatively or in addition, the stored CSI configurations are activated by transmitting the corresponding control command in the step 404. The network does not need to send any state triggers or reporting triggers to the wireless device. It is the wireless device that is triggering the state-transitions internally based on the stored (e.g., received and/or predefined) transition criteria included in the CSI configurations (which may be collectively referred to as state-based configuration).

The transition criteria are assessed in the step 304, and the resulting CSI state is executed in the step 306. The execution of the active CSI state 502 may include a short-periodic CSI reporting 702 and, optionally, aperiodic CSI reports 704 transmitted upon request. The execution of the non-active CSI state 504 may include an event-driven CSI reporting 706 and/or a long-periodic CSI reporting 708 and, optionally, aperiodic CSI reports 710 transmitted upon request.

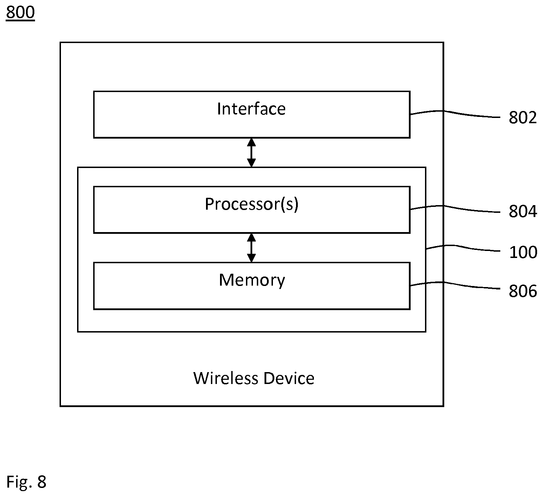

Fig. 8 shows a schematic block diagram for an embodiment of the device 100. The device 100 comprises one or more processors 804 for performing the method 300 and memory 806 coupled to the processors 804. For example, the memory 806 may be encoded with instructions that implement at least one of the modules 102, 104 and 106.

The one or more processors 804 may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the device 100, such as the memory 806, CSI reporting functionality. For example, the one or more processors 804 may execute instructions stored in the memory 806. Such functionality may include providing various features and steps discussed herein, including any of the benefits disclosed herein. The expression "the device being operative to perform an action" may denote the device 100 being configured to perform the action.

As schematically illustrated in Fig. 8, the device 100 may be embodied by a wireless device 800. The wireless device 800 comprises a radio interface 802 coupled to the device 100 for radio communication with a radio node, e.g., a radio access node or another wireless device.

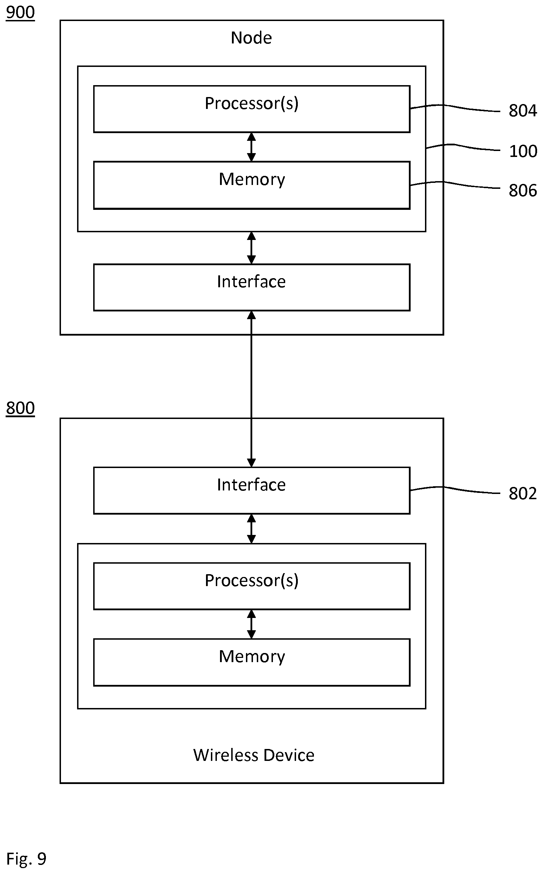

In a variant, e.g., as schematically illustrated in Fig. 9, the functionality of the device 100 is provided by a node 900 linked to the wireless device. That is, the node 900 performs the method 300. The functionality of the device 100 is provided by the node 900 to the wireless device 800, e.g., via the interface 802 or a dedicated wired or wireless interface.

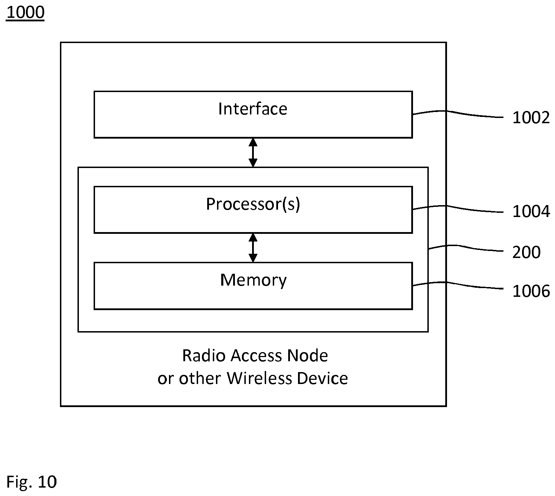

Fig. 10 shows a schematic block diagram for an embodiment of the device 200. The device 200 comprises one or more processors 1004 for performing the method 400 and memory 1006 coupled to the processors 1004. For example, the memory 1006 may be encoded with instructions that implement at least one of the modules 202, 204 and 206.

The one or more processors 1004 may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the device 200, such as the memory 1006, CSI receiving functionality. For example, the one or more processors 1004 may execute instructions stored in the memory 1006. Such functionality may include providing various features and steps discussed herein, including any of the benefits disclosed herein. The expression "the device being operative to perform an action" may denote the device 200 being configured to perform the action.

As schematically illustrated in Fig. 10, the device 200 may be embodied by a radio node 1000, e.g., a radio access node of a RAN or another wireless device wirelessly connected to the wireless device. The radio node 1000 comprises a radio interface 1002 coupled to the device 200 for radio communication with one or more wireless devices.

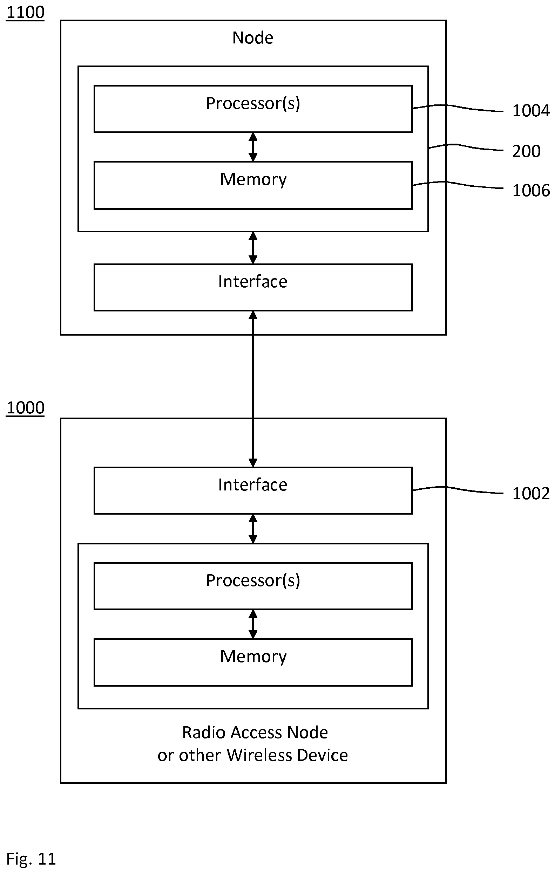

In a variant, e.g., as schematically illustrated in Fig. 11, the functionality of the device 200 is provided by a node 1100, e.g., a node of the RAN or a CN linked to the RAN. That is, the node 1100 performs the method 400. The functionality of the device 200 is provided by the node 1100 to the radio node 1000, e.g., via the interface 1002 or a dedicated wired or wireless interface.

As has become apparent from above description, embodiments of the technique can reduce the load on PUCCH, PUSCH and/or PDCCH. Hence, at least some of these embodiments can reduce interference or collisions on shared radio resources.

Same or further embodiments can make it possible to multiplex more UEs on the same CSI reporting resource. The UEs may be statistically multiplexed, since the events triggering the UEs to use the assigned resource for CSI reporting may not happen at the same time for all UEs. Hence, several UEs may share the same resource for CSI reporting and still maintain an acceptable probability of a CSI report collision.

Moreover, the technique may enable the UE to autonomously report new or updated CSI based on a trigger-criterion, e.g., an expiration measure. The network may be provided with accurate information about the CSI that it is not outdated.

Many advantages of the present invention will be fully understood from the foregoing description, and it will be apparent that various changes may be made in the form, construction and arrangement of the units and devices without departing from the scope of the invention and/or without sacrificing all of its advantages. Since the invention can be varied in many ways, it will be recognized that the invention should be limited only by the scope of the following claims.

## Claims

1. A method (300) of reporting channel state information, CSI, from a wireless device (800) to a radio node (1000), the wireless device (800) being wirelessly connected to the radio node (1000), the method comprising the steps of:
storing (302), at the wireless device (800), different CSI configurations associated with different CSI states (502; 504), wherein the CSI states (502; 504) include at least one active CSI state (502), wherein, according to the CSI configuration associated with the active CSI state (502), the CSI is periodically reported by the wireless device (800) in the active CSI state (502), and wherein the CSI configurations comprise at least one transition criterion for a state transition between the CSI states (502; 504), wherein the transition criterion for the transition to the active CSI state (502) includes a change of the CSI;
determining (304), by the wireless device (800), the state transition to a CSI state among the CSI states (502; 504) if the corresponding transition criterion is fulfilled; and
reporting (306) the CSI according to the CSI configuration that is associated with the CSI state resulting from the determination.

2. The method of claim 1, wherein the radio node (1000) comprises at least one of a radio access node of a radio access network, RAN, and another wireless device in a device-to-device, D2D, communication with the wireless device (800); and/or
wherein the step (304) of determining the state transition to the CSI state includes:
determining, by the wireless device (800), for each of one or more of the CSI states (502; 504) whether the transition criterion for the state transition to the corresponding CSI state is fulfilled, wherein the CSI state for which the transition criterion is fulfilled is determined; and/or
wherein the transition criterion depends on a current CSI state among the CSI states (502; 504); and/or
wherein, in the active CSI state (502) of the wireless device (800), the CSI is reported on a physical uplink control channel, PUCCH, or multiplexed with data (604) on a physical uplink shared channel, PUSCH, of a RAN or the radio node (1000); and/or
wherein the CSI configuration associated with the active CSI state (502) is indicative of a periodicity (606) for the reporting (306) of the CSI; and/or
wherein the transition criterion for the transition to the active CSI state (502) includes at least one of an arrival of uplink data (604) and a reception of downlink data (602).

3. The method of claim 1 or 2, wherein the CSI states (502; 504) include at least one inactive CSI state (504), optionally wherein the CSI is reported more frequently in the active CSI state (502) than in the inactive CSI state (504).

4. The method of claim 3, wherein the CSI is periodically reported according to the CSI configuration associated with the inactive CSI state (504),
optionally wherein, according to the CSI configuration associated with the active CSI state (502), the CSI is periodically reported by the wireless device (800) in the active CSI state (502), and wherein the CSI configuration associated with the inactive CSI state (504) is indicative of a periodicity for the reporting of the CSI, which is longer than the periodicity of the active CSI state (502).

5. The method of claim 3 or 4, wherein the reporting (304) of the CSI by the wireless device (800) in the inactive CSI state (504) is triggered (710) by a request received from a RAN or the radio node (1000); and/or
wherein the reporting (304) of the CSI by the wireless device (800) in the inactive CSI state (504) is triggered (706) by an event according to the CSI configuration associated with the inactive CSI state (504); and/or
wherein the reporting (304) of the CSI by the wireless device (800) in the inactive CSI state (504) is triggered (706) by a change of the CSI according to the CSI configuration associated with the inactive CSI state (504).

6. The method of claim 5, wherein the triggered reporting (706; 710) includes the step of:
obtaining a radio resource of a RAN or the radio node (1000) for transmitting the CSI.

7. The method of any one of claims 1 to 6, wherein the change of the CSI includes a change of at least one of a reference signal received power, RSRP; a channel quality indicator, CQI; a signal-to-noise ratio, SNR; a precoding matrix index, PMI; and rank indicator, Rl.

8. The method of any one of claims 1 to 7 in combination with claim 4, wherein the transition criterion for the transition to the inactive CSI state (504) includes an expiry of a timer at the wireless device (800),
optionally wherein the timer is reset upon at least one of arrival of uplink data (604) and reception of downlink data (602);
further optionally wherein a status of a buffer at the wireless device (800) or a scheduling grant from the radio node (1000) is indicative of the arrival, and/or wherein the downlink data (602) is received from the radio node (1000) or a scheduling assignment from the radio node (1000) is indicative of the reception;
still further optionally further comprising the step of:
performing a deep packet inspection, DPI, or a stateful packet inspection, SPI, of at least one of the uplink data (604) and the downlink data (602), wherein an expected arrival or expected reception of an acknowledgment message is indicative of the arrival or the reception.

9. The method of any one of claims 1 to 8, further comprising the step of:
performing a measurement for the CSI based on reference signals, RS, for the CSI; and/or
further comprising at least one of the steps of:
- receiving at least one configuration message from the radio node (1000), the at least one configuration message comprising or being indicative of at least one of
the CSI configurations associated with the CSI states (502; 504) of the wireless device (800) or an update thereof, and
a control command controlling the wireless device (800) to perform at least the determining step (304); and
- receiving, from the radio node (1000), the configuration message or a further configuration message, which comprises or is indicative of the transition criterion for at least one of the CSI states (502; 504) stored or to be stored at the wireless device (800); and/or
wherein the reporting (306) of the CSI includes transmitting the CSI on a shared radio resource of a RAN or the radio node (1000), the method further comprising the steps of:
- receiving a scheduling grant responsive to a collision on the shared radio resource; and
- retransmitting the CSI according to the scheduling grant.

10. A method (400) of receiving channel state information, CSI, from a wireless device (800) at a radio node (1000) providing radio access to the wireless device (800), the method comprising the steps of:
transmitting (402; 404) at least one configuration message to the wireless device (800), the at least one configuration message comprising or being indicative of different CSI configurations associated with different CSI states (502; 504) of the wireless device (800), wherein the CSI states (502; 504) include at least one active CSI state (502), wherein, according to the CSI configuration associated with the active CSI state (502), the CSI is periodically reported by the wireless device (800) in the active CSI state (502), and wherein the CSI configurations comprise at least one transition criterion for a state transition between the CSI states (502; 504), wherein the transition criterion for the transition to the active CSI state (502) includes a change of the CSI; and
receiving (406) the CSI according to the CSI configuration that is associated with a CSI state resulting from a determination, by the wireless device (800), of the state transition to the CSI state among the CSI states (502; 504) if the corresponding transition criterion is fulfilled based on the CSI configurations stored at the wireless device (800).

11. The method of claim 10, wherein the at least one configuration message comprises or is indicative of a control command controlling the wireless device (800) to determine the state transition to the CSI state among the CSI states (502; 504) if the corresponding transition criterion is fulfilled based on the CSI configurations stored at the wireless device (800); and/or
wherein the control command for determining the state transition to the CSI state controls:
- determining, by the wireless device (800), for each of one or more of the CSI states (502; 504) whether the transition criterion for the state transition to the corresponding CSI state is fulfilled, wherein the CSI state for which the transition criterion is fulfilled is determined; and/or
wherein the CSI is received on a shared radio resource of a RAN or the radio node (1000), the method further comprising the steps of:
- detecting a collision on the shared radio resource;
- transmitting a scheduling grant responsive to the detected collision on the shared radio resource; and
- receiving the CSI according to the scheduling grant.

12. The method of claim 10 or 11, wherein the radio node (1000) comprises at least one of a radio access node of a radio access network, RAN, and another wireless device in a device-to-device, D2D, communication with the wireless device (800); and/or
wherein the transition criterion depends on a current CSI state among the CSI states (502; 504); and/or
wherein, in the active CSI state (502) of the wireless device (800), the CSI is reported on a physical uplink control channel, PUCCH, or multiplexed with data (604) on a physical uplink shared channel, PUSCH, of a RAN or the radio node (1000); and/or
wherein the CSI configuration associated with the active CSI state (502) is indicative of a periodicity (606) for the reporting (306) of the CSI; and/or
wherein the transition criterion for the transition to the active CSI state (502) includes at least one of an arrival of uplink data (604) and a reception of downlink data (602); and/or
further comprising any feature or a corresponding feature according to any one of claims 3 to 8.

13. A computer program product comprising program code portions for performing the steps of any one of the claims 1 to 9 or 10 to 12 when the computer program product is executed on one or more computing devices (804; 1004), optionally stored on a computer-readable recording medium (806; 1006).

14. A device (100) for reporting channel state information, CSI, from a wireless device (800) to a radio node (1000), the wireless device (800) being wirelessly connected or connectable to the radio node (1000), the device (100) being configured to:
store, at the wireless device (800), different CSI configurations associated with different CSI states (502; 504), wherein the CSI states (502; 504) include at least one active CSI state (502), wherein, according to the CSI configuration associated with the active CSI state (502), the CSI is periodically reported by the wireless device (800) in the active CSI state (502), and wherein the CSI configurations comprise at least one transition criterion for a state transition between the CSI states (502; 504), wherein the transition criterion for the transition to the active CSI state (502) includes a change of the CSI;
determine, by the wireless device (800), the state transition to a CSI state among the CSI states (502; 504) if the corresponding transition criterion is fulfilled; and
report the CSI according to the CSI configuration that is associated with the CSI state resulting from the determination.

15. The device of claim 14, further configured to perform the steps of any one of claims 2 to 9.

16. A device (200) for receiving channel state information, CSI, from a wireless device (800) at a radio node (1000) providing radio access to the wireless device (800), the device (200) being configured to:
transmit at least one configuration message to the wireless device (800), the at least one configuration message comprising or being indicative of different CSI configurations associated with different CSI states (502; 504) of the wireless device (800), wherein the CSI states (502; 504) include at least one active CSI state (502), wherein, according to the CSI configuration associated with the active CSI state (502), the CSI is periodically reported by the wireless device (800) in the active CSI state (502), and wherein the CSI configurations comprise at least one transition criterion for a state transition between the CSI states (502; 504), wherein the transition criterion for the transition to the active CSI state (502) includes a change of the CSI;
receive the CSI according to the CSI configuration that is associated with a CSI state resulting from a determination, by the wireless device (800), of the state transition to the CSI state among the CSI states (502; 504) if the corresponding transition criterion is fulfilled based on the CSI configurations stored at the wireless device (800).

17. The device of claim 16, further configured to perform the steps of claim 11 or 12.

## Patentansprüche

1. Verfahren (300) zum Melden von Kanalzustandsinformationen, CSI, von einer drahtlosen Vorrichtung (800) an einen Funkknoten (1000), wobei die drahtlose Vorrichtung (800) drahtlos mit dem Funkknoten (1000) verbunden ist, das Verfahren umfassend die Schritte:
Speichern (302), an der drahtlosen Vorrichtung (800), von verschiedenen CSI-Konfigurationen, die verschiedenen CSI-Zuständen (502; 504) zugeordnet sind, wobei die CSI-Zustände (502; 504) mindestens einen aktiven CSI-Zustand (502) einschließen, wobei die CSI gemäß der CSI-Konfiguration, die dem aktiven CSI-Zustand (502) zugeordnet ist, periodisch durch die drahtlose Vorrichtung (800) in dem aktiven CSI-Zustand (502) gemeldet werden, und wobei die CSI-Konfigurationen mindestens ein Übergangskriterium für einen Zustandsübergang zwischen den CSI-Zuständen (502; 504) umfassen, wobei das Übergangskriterium für den Übergang zu dem aktiven CSI-Zustand (502) eine Änderung der CSI einschließt;
Bestimmen (304), durch die drahtlose Vorrichtung (800), des Zustandsübergangs in einen CSI-Zustand unter den CSI-Zuständen (502; 504), wenn das entsprechende Übergangskriterium erfüllt ist; und
Melden (306) der CSI gemäß der CSI-Konfiguration, die dem CSI-Zustand zugeordnet ist, der aus der Bestimmung resultiert.

2. Verfahren nach Anspruch 1, wobei der Funkknoten (1000) mindestens eines von einem Funkzugangsknoten eines Funkzugangsnetzes, RAN, und einer anderen drahtlosen Vorrichtung in einer Vorrichtung-zu-Vorrichtung-Kommunikation, D2D-Kommunikation, mit der drahtlosen Vorrichtung (800) umfasst; und/oder
wobei der Schritt (304) des Bestimmens des Zustandsübergangs in den CSI-Zustand einschließt:
Bestimmen, durch die drahtlose Vorrichtung (800), für jeden von einem oder mehreren der CSI-Zustände (502; 504), ob das Übergangskriterium für den Zustandsübergang in den entsprechenden CSI-Zustand erfüllt ist, wobei der CSI-Zustand, für den das Übergangskriterium erfüllt ist, bestimmt wird; und/oder
wobei das Übergangskriterium von einem aktuellen CSI-Zustand unter den CSI-Zuständen (502; 504) abhängt; und/oder
wobei in dem aktiven CSI-Zustand (502) der drahtlosen Vorrichtung (800) die CSI auf einem Physical Uplink Control Channel, PUCCH, gemeldet oder auf einem Physical Uplink Shared Channel, PUSCH, eines RAN oder des Funkknotens (1000) mit Daten (604) gemultiplext werden; und/oder
wobei die CSI-Konfiguration, die dem aktiven CSI-Zustand (502) zugeordnet ist, eine Periodizität (606) für das Melden (306) der CSI angibt; und/oder
wobei das Übergangskriterium für den Übergang in den aktiven CSI-Zustand (502) mindestens eines von einer Ankunft von Uplink-Daten (604) und einem Empfang von Downlink-Daten (602) einschließt.

3. Verfahren nach Anspruch 1 oder 2, wobei die CSI-Zustände (502; 504) mindestens einen inaktiven CSI-Zustand (504) einschließen, optional wobei die CSI häufiger in dem aktiven CSI-Zustand (502) als in dem inaktiven CSI-Zustand (504) gemeldet werden.

4. Verfahren nach Anspruch 3, wobei die CSI periodisch gemäß der CSI-Konfiguration gemeldet werden, die dem inaktiven CSI-Zustand (504) zugeordnet ist,
optional wobei, gemäß der CSI-Konfiguration, die dem aktiven CSI-Zustand (502) zugeordnet ist, die CSI periodisch von der drahtlosen Vorrichtung (800) in dem aktiven CSI-Zustand (502) gemeldet werden, und wobei die CSI-Konfiguration, die dem inaktiven CSI-Zustand (504) zugeordnet ist, eine Periodizität für das Melden der CSI angibt, die länger als die Periodizität des aktiven CSI-Zustands (502) ist.

5. Verfahren nach Anspruch 3 oder 4, wobei das Melden (304) der CSI durch die drahtlose Vorrichtung (800) in dem inaktiven CSI-Zustand (504) durch eine Anforderung ausgelöst wird (710), die von einem RAN oder dem Funkknoten (1000) empfangen wird; und/oder
wobei das Melden (304) der CSI durch die drahtlose Vorrichtung (800) in dem inaktiven CSI-Zustand (504) durch ein Ereignis gemäß der CSI-Konfiguration, die dem inaktiven CSI-Zustand (504) zugeordnet ist, ausgelöst (706) wird; und/oder
wobei das Melden (304) der CSI durch die drahtlose Vorrichtung (800) in dem inaktiven CSI-Zustand (504) durch eine Änderung der CSI gemäß der CSI-Konfiguration, die dem inaktiven CSI-Zustand (504) zugeordnet ist, ausgelöst (706) wird.

6. Verfahren nach Anspruch 5, wobei das ausgelöste Melden (706; 710) den Schritt einschließt:
Erhalten einer Funkressource eines RAN oder des Funkknotens (1000) zum Übertragen der CSI.

7. Verfahren nach einem der Ansprüche 1 bis 6, wobei die Änderung der CSI eine Änderung mindestens eines von einer Referenzsignal-Empfangsleistung, RSRP; einem Kanalqualitätsindikator, CQI; einem Signal-Rausch-Verhältnis, SNR; einem Vorcodierungsmatrixindex, PMI; und einem Rangindikator, RI, einschließt.

8. Verfahren nach einem der Ansprüche 1 bis 7 in Kombination mit Anspruch 4, wobei das Übergangskriterium für den Übergang in den inaktiven CSI-Zustand (504) einen Ablauf eines Zeitgebers an der drahtlosen Vorrichtung (800) einschließt,
optional wobei der Zeitgeber bei mindestens einem von Ankunft von Uplink-Daten (604) und Empfang von Downlink-Daten (602) zurückgesetzt wird;
ferner optional wobei ein Status eines Puffers an der drahtlosen Vorrichtung (800) oder einer Scheduling-Gewährung von dem Funkknoten (1000) die Ankunft angibt, und/oder wobei die Downlink-Daten (602) von dem Funkknoten (1000) empfangen werden oder eine Scheduling-Zuweisung von dem Funkknoten (1000) den Empfang angibt;
weiterhin optional ferner umfassend den Schritt:
Durchführen einer umfassenden Paketüberprüfung, DPI, oder einer zustandsorientierten Paketüberprüfung, SPI, mindestens eines von den Uplink-Daten (604) und den Downlink-Daten (602), wobei eine erwartete Ankunft oder ein erwarteter Empfang einer Bestätigungsnachricht die Ankunft oder den Empfang angibt.

9. Verfahren nach einem der Ansprüche 1 bis 8, ferner umfassend den Schritt:
Durchführen einer Messung für die CSI basierend auf Referenzsignalen, RS, für die CSI; und/oder
ferner umfassend mindestens einen der Schritte:
- Empfangen mindestens einer Konfigurationsnachricht von dem Funkknoten (1000), wobei die mindestens eine Konfigurationsnachricht mindestens eines von Folgendem umfasst oder angibt
die CSI-Konfigurationen, die den CSI-Zuständen (502; 504) der drahtlosen Vorrichtung (800) zugeordnet sind, oder eine Aktualisierung davon, und
einen Steuerbefehl, der die drahtlose Vorrichtung (800) steuert, um mindestens den Bestimmungsschritt (304) durchzuführen; und
- Empfangen, von dem Funkknoten (1000), der Konfigurationsnachricht oder einer weiteren Konfigurationsnachricht, die das Übergangskriterium für mindestens einen der CSI-Zustände (502; 504) umfasst oder angibt, das auf der drahtlosen Vorrichtung (800) gespeichert ist oder gespeichert werden soll; und/oder
wobei das Melden (306) der CSI das Übertragen der CSI auf einer gemeinsam genutzten Funkressource eines RAN oder des Funkknotens (1000) einschließt, das Verfahren ferner umfassend die Schritte:
- Empfangen einer Scheduling-Gewährung als Reaktion auf eine Kollision auf der gemeinsam genutzten Funkressource; und
- erneutes Übertragen der CSI gemäß der Scheduling-Gewährung.

10. Verfahren (400) zum Empfangen von Kanalzustandsinformationen, CSI, von einer drahtlosen Vorrichtung (800) an einem Funkknoten (1000), der der drahtlosen Vorrichtung (800) Funkzugang bereitstellt, das Verfahren umfassend die Schritte:
Übertragen (402; 404) von mindestens einer Konfigurationsnachricht an die drahtlose Vorrichtung (800), wobei die mindestens eine Konfigurationsnachricht verschiedene CSI-Konfigurationen umfasst oder angibt, die verschiedenen CSI-Zuständen (502; 504) der drahtlosen Vorrichtung (800) zugeordnet sind, wobei die CSI-Zustände (502; 504) mindestens einen aktiven CSI-Zustand (502) einschließen, wobei die CSI gemäß der CSI-Konfiguration, die dem aktiven CSI-Zustand (502) zugeordnet ist, periodisch durch die drahtlose Vorrichtung (800) in dem aktiven CSI-Zustand (502) gemeldet werden, und wobei die CSI-Konfigurationen mindestens ein Übergangskriterium für einen Zustandsübergang zwischen den CSI-Zuständen (502; 504) umfassen, wobei das Übergangskriterium für den Übergang zu dem aktiven CSI-Zustand (502) eine Änderung der CSI einschließt; und
Empfangen (406) der CSI gemäß der CSI-Konfiguration, die einem CSI-Zustand zugeordnet ist, der aus einer Bestimmung des Zustandsübergangs in den CSI-Zustand unter den CSI-Zuständen (502; 504) durch die drahtlose Vorrichtung (800) resultiert, wenn das entsprechende Übergangskriterium basierend auf den auf der drahtlosen Vorrichtung (800) gespeicherten CSI-Konfigurationen erfüllt ist.

11. Verfahren nach Anspruch 10, wobei die mindestens eine Konfigurationsnachricht einen Steuerbefehl umfasst oder angibt, der die drahtlose Vorrichtung (800) steuert, um den Zustandsübergang in den CSI-Zustand unter den CSI-Zuständen (502; 504) zu bestimmen, wenn das entsprechende Übergangskriterium basierend auf den auf der drahtlosen Vorrichtung (800) gespeicherten CSI-Konfigurationen erfüllt ist; und/oder
wobei der Steuerbefehl zum Bestimmen des Zustandsübergangs in den CSI-Zustand steuert:
- Bestimmen, durch die drahtlose Vorrichtung (800), für jeden von einem oder mehreren der CSI-Zustände (502; 504), ob das Übergangskriterium für den Zustandsübergang in den entsprechenden CSI-Zustand erfüllt ist, wobei der CSI-Zustand, für den das Übergangskriterium erfüllt ist, bestimmt wird; und/oder
wobei die CSI auf einer gemeinsam genutzten Funkressource eines RAN oder des Funkknotens (1000) empfangen werden, das Verfahren ferner umfassend die Schritte:
- Erfassen einer Kollision auf der gemeinsam genutzten Funkressource;
- Übertragen einer Scheduling-Gewährung als Reaktion auf die erfasste Kollision auf der gemeinsam genutzten Funkressource; und
- Empfangen der CSI gemäß der Scheduling-Gewährung.

12. Verfahren nach Anspruch 10 oder 11, wobei der Funkknoten (1000) mindestens eines von einem Funkzugangsknoten eines Funkzugangsnetzes, RAN, und einer anderen drahtlosen Vorrichtung in einer Vorrichtung-zu-Vorrichtung-Kommunikation, D2D-Kommunikation, mit der drahtlosen Vorrichtung (800) umfasst; und/oder
wobei das Übergangskriterium von einem aktuellen CSI-Zustand unter den CSI-Zuständen (502; 504) abhängt; und/oder
wobei in dem aktiven CSI-Zustand (502) der drahtlosen Vorrichtung (800) die CSI auf einem Physical Uplink Control Channel, PUCCH, gemeldet oder auf einem Physical Uplink Shared Channel, PUSCH, eines RAN oder des Funkknotens (1000) mit Daten (604) gemultiplext werden; und/oder
wobei die CSI-Konfiguration, die dem aktiven CSI-Zustand (502) zugeordnet ist, eine Periodizität (606) für das Melden (306) der CSI angibt; und/oder
wobei das Übergangskriterium für den Übergang in den aktiven CSI-Zustand (502) mindestens eines von einer Ankunft von Uplink-Daten (604) und einem Empfang von Downlink-Daten (602) einschließt; und/oder
ferner umfassend ein beliebiges Merkmal oder ein entsprechendes Merkmal nach einem der Ansprüche 3 bis 8.

13. Computerprogrammprodukt, umfassend Programmcodeabschnitte zum Durchführen der Schritte nach einem der Ansprüche 1 bis 9 oder 10 bis 12, wenn das Computerprogrammprodukt auf einer oder mehreren Rechenvorrichtungen (804; 1004) ausgeführt wird, optional gespeichert auf einem computerlesbaren Aufzeichnungsmedium (806; 1006).

14. Verfahren (100) zum Melden von Kanalzustandsinformationen, CSI, von einer drahtlosen Vorrichtung (800) an einen Funkknoten (1000), wobei die drahtlose Vorrichtung (800) drahtlos mit dem Funkknoten (1000) verbunden oder verbindbar ist, wobei die Vorrichtung (100) konfiguriert ist zum:
Speichern, an der drahtlosen Vorrichtung (800), von verschiedenen CSI-Konfigurationen, die verschiedenen CSI-Zuständen (502; 504) zugeordnet sind, wobei die CSI-Zustände (502; 504) mindestens einen aktiven CSI-Zustand (502) einschließen, wobei die CSI gemäß der CSI-Konfiguration, die dem aktiven CSI-Zustand (502) zugeordnet ist, periodisch durch die drahtlose Vorrichtung (800) in dem aktiven CSI-Zustand (502) gemeldet werden, und wobei die CSI-Konfigurationen mindestens ein Übergangskriterium für einen Zustandsübergang zwischen den CSI-Zuständen (502; 504) umfassen, wobei das Übergangskriterium für den Übergang in den aktiven CSI-Zustand (502) eine Änderung der CSI einschließt;
Bestimmen, durch die drahtlose Vorrichtung (800), des Zustandsübergangs in einen CSI-Zustand unter den CSI-Zuständen (502; 504), wenn das entsprechende Übergangskriterium erfüllt ist; und
Melden der CSI gemäß der CSI-Konfiguration, die dem CSI-Zustand zugeordnet ist, der aus der Bestimmung resultiert.

15. Vorrichtung nach Anspruch 14, die ferner konfiguriert ist, um die Schritte nach einem der Ansprüche 2 bis 9 durchzuführen.

16. Vorrichtung (200) zum Empfangen von Kanalzustandsinformationen, CSI, von einer drahtlosen Vorrichtung (800) an einem Funkknoten (1000), der der drahtlosen Vorrichtung (800) Funkzugang bereitstellt, wobei die Vorrichtung (200) konfiguriert ist zum:
Übertragen von mindestens einer Konfigurationsnachricht an die drahtlose Vorrichtung (800), wobei die mindestens eine Konfigurationsnachricht verschiedene CSI-Konfigurationen umfasst oder angibt, die verschiedenen CSI-Zuständen (502; 504) der drahtlosen Vorrichtung (800) zugeordnet sind, wobei die CSI-Zustände (502; 504) mindestens einen aktiven CSI-Zustand (502) einschließen, wobei die CSI gemäß der CSI-Konfiguration, die dem aktiven CSI-Zustand (502) zugeordnet ist, periodisch durch die drahtlose Vorrichtung (800) in dem aktiven CSI-Zustand (502) gemeldet werden, und wobei die CSI-Konfigurationen mindestens ein Übergangskriterium für einen Zustandsübergang zwischen den CSI-Zuständen (502; 504) umfassen, wobei das Übergangskriterium für den Übergang zu dem aktiven CSI-Zustand (502) eine Änderung der CSI einschließt;
Empfangen der CSI gemäß der CSI-Konfiguration, die einem CSI-Zustand zugeordnet ist, der aus einer Bestimmung des Zustandsübergangs in den CSI-Zustand unter den CSI-Zuständen (502; 504) durch die drahtlose Vorrichtung (800) resultiert, wenn das entsprechende Übergangskriterium basierend auf den auf der drahtlosen Vorrichtung (800) gespeicherten CSI-Konfigurationen erfüllt ist.

17. Vorrichtung nach Anspruch 16, die ferner konfiguriert ist, um die Schritte nach Anspruch 11 oder 12 durchzuführen.

## Revendications

1. Procédé (300) de rapport d'informations d'état de canal, CSI, depuis un dispositif sans fil (800) vers un noeud radio (1000), le dispositif sans fil (800) étant connecté sans fil au noeud radio (1000), le procédé comprenant les étapes comprenant les étapes consistant à :
stocker (302), au niveau du dispositif sans fil (800), des configurations de CSI différentes associées à différents états de CSI (502 ; 504), dans lequel les états de CSI (502 ; 504) comportent au moins un état de CSI actif (502), dans lequel, selon la configuration de CSI associée à l'état de CSI actif (502), les CSI sont rapportées périodiquement par le dispositif sans fil (800) dans l'état de CSI actif (502), et dans lequel les configurations de CSI comprennent au moins un critère de transition pour une transition d'état entre les états de CSI (502 ; 504), dans lequel le critère de transition pour la transition vers l'état de CSI actif (502) comporte un changement des CSI ;
déterminer (304), à l'aide du dispositif sans fil (800), la transition d'état vers un état de CSI parmi les états de CSI (502 ; 504) si le critère de transition correspondant est satisfait ; et
rapporter (306) les CSI selon la configuration de CSI qui est associée à l'état de CSI résultant de la détermination.

2. Procédé selon la revendication 1, dans lequel le noeud radio (1000) comprend au moins l'un parmi un noeud d'accès radio d'un réseau d'accès radio, un RAN, et un autre dispositif sans fil dans une communication de dispositif à dispositif, D2D, avec le dispositif sans fil (800) ; et/ou
dans lequel l'étape (304) de détermination de la transition d'état vers l'état de CSI comporte :
la détermination, par le dispositif sans fil (800), pour chacun parmi un ou plusieurs des états de CSI (502 ; 504), du fait que le critère de transition pour la transition d'état vers l'état de CSI correspondant est satisfait, dans lequel l'état de CSI pour lequel le critère de transition est satisfait est déterminé ; et/ou
dans lequel le critère de transition dépend d'un état de CSI actuel parmi les états de CSI (502 ; 504) ; et/ou
dans lequel, dans l'état de CSI actif (502) du dispositif sans fil (800), les CSI sont rapportées sur un canal physique de commande de liaison montante, PUCCH, ou multiplexées avec des données (604) sur un canal partagé de liaison montante physique, PUSCH, d'un RAN ou du noeud radio (1000) ; et/ou
dans lequel la configuration de CSI associée à l'état de CSI actif (502) indique une périodicité (606) pour le rapport (306) des CSI ; et/ou
dans lequel le critère de transition pour la transition vers l'état de CSI actif (502) comporte au moins l'une parmi une arrivée de données de liaison montante (604) et une réception de données de liaison descendante (602).

3. Procédé selon la revendication 1 ou 2, dans lequel les états de CSI (502 ; 504) comportent au moins un état de CSI inactif (504), éventuellement dans lequel les CSI sont rapportées plus fréquemment dans l'état de CSI actif (502) que dans l'état de CSI inactif (504).

4. Procédé selon la revendication 3, dans lequel les CSI sont périodiquement rapportées selon la configuration de CSI associée à l'état de CSI inactif (504),
éventuellement dans lequel, selon la configuration de CSI associée à l'état de CSI actif (502), les CSI sont périodiquement rapportées par le dispositif sans fil (800) dans l'état de CSI actif (502), et dans lequel la configuration de CSI associée à l'état de CSI inactif (504) indique une périodicité pour le rapport des CSI, qui est plus longue que la périodicité de l'état de CSI actif (502).

5. Procédé selon la revendication 3 ou 4, dans lequel le rapport (304) des CSI réalisé par le dispositif sans fil (800) dans l'état de CSI inactif (504) est déclenché (710) par une demande reçue d'un RAN ou du noeud radio (1000) ; et/ou
dans lequel le rapport (304) des CSI réalisé par le dispositif sans fil (800) dans l'état de CSI inactif (504) est déclenché (706) par un événement selon la configuration de CSI associée à l'état de CSI inactif (504) ; et/ou
dans lequel le rapport (304) des CSI réalisé par le dispositif sans fil (800) dans l'état de CSI inactif (504) est déclenché (706) par un changement des CSI selon la configuration de CSI associée à l'état de CSI inactif (504).

6. Procédé selon la revendication 5, dans lequel le rapport déclenché (706 ; 710) comporte l'étape consistant à :
obtenir une ressource radio d'un RAN ou d'un noeud radio (1000) pour transmettre les CSI.

7. Procédé selon l'une quelconque des revendications 1 à 6, dans lequel le changement des CSI comporte un changement d'au moins l'un parmi une puissance reçue de signal de référence (RSRP) ; un indicateur de qualité de canal, CQI ; un rapport signal sur bruit, SNR ; un indice de matrice de précodage, PMI ; et un indicateur de rang, RI.

8. Procédé selon l'une quelconque des revendications 1 à 7 en combinaison avec la revendication 4, dans lequel le critère de transition pour la transition vers l'état de CSI inactif (504) comporte une expiration d'un temporisateur au niveau du dispositif sans fil (800),
éventuellement dans lequel le temporisateur est réinitialisé lors d'au moins l'une parmi l'arrivée des données de liaison montante (604) et la réception des données de liaison descendante (602) ;
en outre éventuellement dans lequel un état d'un tampon au niveau du dispositif sans fil (800) ou une autorisation de planification à partir du noeud radio (1000) indique l'arrivée, et/ou dans lequel les données de liaison descendante (602) sont reçues du noeud radio (1000) ou une attribution de planification à partir du noeud radio (1000) indique la réception ;
encore en outre éventuellement, comprenant en outre l'étape consistant à :
réaliser une inspection approfondie de paquets, DPI, ou une inspection de paquets à l'état actif, SPI, d'au moins l'une parmi les données de liaison montante (604) et les données de liaison descendante (602), dans lequel une arrivée attendue ou une réception attendue d'un message d'accusé de réception indique l'arrivée ou la réception.

9. Procédé selon l'une quelconque des revendications 1 à 8, comprenant en outre les étapes consistant à :
réaliser une mesure pour les CSI sur la base de signaux de référence, RS, pour les CSI ; et/ou
comprenant en outre au moins l'une des étapes consistant à :
- recevoir au moins un message de configuration du noeud radio (1000), l'au moins un message de configuration comprenant ou indiquant au moins l'une parmi
des configurations de CSI associées aux états de CSI (502 ; 504) du dispositif sans fil (800) ou une mise à jour de celles-ci, et
une instruction de commande amenant le dispositif sans fil (800) à réaliser au moins l'étape de détermination (304) ; et
- à recevoir, du noeud radio (1000), le message de configuration ou un autre message de configuration, qui comprend ou indique le critère de transition pour au moins l'un des états de CSI (502 ; 504) stockés ou destinés à être stockés au niveau du dispositif sans fil (800) ; et/ou
dans lequel le rapport (306) des CSI comporte la transmission des CSI sur une ressource radio partagée d'un RAN ou du noeud radio (1000), le procédé comprenant en outre les étapes consistant à :
- recevoir une autorisation de planification en réponse à une collision sur la ressource radio partagée ; et
- retransmettre les CSI selon l'autorisation de planification.

10. Procédé (400) de réception d'informations d'état de canal, CSI, d'un dispositif sans fil (800) au niveau d'un noeud radio (1000) fournissant un accès radio au dispositif sans fil (800), le procédé comprenant les étapes consistant à :
transmettre (402 ; 404) au moins un message de configuration au dispositif sans fil (800), l'au moins un message de configuration comprenant ou indiquant les différentes configurations de CSI associées à différents états de CSI (502 ; 504) du dispositif sans fil (800), dans lequel les états de CSI (502 ; 504) comportent au moins un état de CSI actif (502), dans lequel, selon la configuration de CSI associée à l'état de CSI actif (502), les CSI sont rapportées périodiquement par le dispositif sans fil (800) dans l'état de CSI actif (502), et dans lequel les configurations de CSI comprennent au moins un critère de transition pour une transition d'état entre les états de CSI (502 ; 504), dans lequel le critère de transition pour la transition vers l'état de CSI actif (502) comporte un changement des CSI ; et
à recevoir (406) les CSI selon la configuration de CSI qui est associée à un état de CSI résultant d'une détermination, par le dispositif sans fil (800), de la transition d'état vers l'état de CSI parmi les états de CSI (502 ; 504) si le critère de transition correspondant est satisfait sur la base des configurations de CSI stockées au niveau du dispositif sans fil (800).

11. Procédé selon la revendication 10, dans lequel l'au moins un message de configuration comprend ou indique une instruction de commande amenant le dispositif sans fil (800) à déterminer la transition d'état vers l'état de CSI parmi les états de CSI (502 ; 504) si le critère de transition correspondant est satisfait sur la base des configurations de CSI stockées au niveau du dispositif sans fil (800) ; et/ou
dans lequel l'instruction de commande destinée à déterminer la transition d'état vers l'état de CSI instruit :
- la détermination, par le dispositif sans fil (800), pour chacun parmi un ou plusieurs des états de CSI (502 ; 504), du fait que le critère de transition pour la transition d'état vers l'état de CSI correspondant est satisfait, dans lequel l'état de CSI pour lequel le critère de transition est satisfait est déterminé ; et/ou
dans lequel les CSI sont reçues sur une ressource radio partagée d'un RAN ou du noeud radio (1000), le procédé comprenant en outre les étapes consistant à :
- détecter une collision sur la ressource radio partagée ;
- transmettre une autorisation de planification en réponse à la collision détectée sur la ressource radio partagée ; et
- à recevoir les CSI selon l'autorisation de planification.

12. Procédé selon la revendication 10 ou 11, dans lequel le noeud radio (1000) comprend au moins l'un parmi un noeud d'accès radio d'un réseau d'accès radio, un RAN, un autre dispositif sans fil dans une communication de dispositif à dispositif, D2D, avec le dispositif sans fil (800) ; et/ou
dans lequel le critère de transition dépend d'un état de CSI actuel parmi les états de CSI (502 ; 504) ; et/ou
dans lequel, dans l'état de CSI actif (502) du dispositif sans fil (800), les CSI sont rapportées sur un canal physique de commande de liaison montante, PUCCH, ou multiplexées avec des données (604) sur un canal partagé de liaison montante physique, PUSCH d'un RAN ou du noeud radio (1000) ; et/ou
dans lequel la configuration de CSI associée à l'état de CSI actif (502) indique une périodicité (606) pour le rapport (306) des CSI ; et/ou
dans lequel le critère de transition pour la transition vers l'état de CSI actif (502) comporte au moins l'une parmi une arrivée de données de liaison montante (604) et une réception de données de liaison descendante (602) ; et/ou
comprenant en outre une quelconque caractéristique ou une caractéristique correspondante selon l'une quelconque des revendications 3 à 8.

13. Produit de programme informatique comprenant des parties de code de programme pour réaliser les étapes selon l'une quelconque des revendications 1 à 9 ou 10 à 12 lorsque le produit de programme informatique est exécuté sur un ou plusieurs dispositifs informatiques (804 ; 1004), éventuellement stocké sur un support d'enregistrement lisible par ordinateur (806 ; 1006).

14. Dispositif (100) destiné à rapporter des informations d'état de canal, CSI, d'un dispositif sans fil (800) à un noeud radio (1000), le dispositif sans fil (800) étant connecté ou pouvant être connecté sans fil au noeud radio (1000), le dispositif (100) étant configuré pour :
stocker, au niveau du dispositif sans fil (800), des configurations de CSI différentes associées à différents états de CSI (502 ; 504), dans lequel les états de CSI (502 ; 504) comportent au moins un état de CSI actif (502), dans lequel, selon la configuration de CSI associée à l'état de CSI actif (502), les CSI sont rapportées périodiquement par le dispositif sans fil (800) dans l'état de CSI actif (502), et dans lequel les configurations de CSI comprennent au moins un critère de transition pour une transition d'état entre les états de CSI (502 ; 504), dans lequel le critère de transition pour la transition vers l'état de CSI actif (502) comporte un changement des CSI ;
déterminer, à l'aide du dispositif sans fil (800), la transition d'état vers un état de CSI parmi les états de CSI (502 ; 504) si le critère de transition correspondant est satisfait ; et
rapporter les CSI selon la configuration de CSI qui est associée à l'état de CSI résultant de la détermination.

15. Dispositif selon la revendication 14, configuré en outre pour réaliser les étapes de l'une quelconque des revendications 2 à 9.

16. Dispositif (200) destiné à recevoir des informations d'état de canal (CSI) d'un dispositif sans fil (800) au niveau d'un noeud radio (1000) fournissant un accès radio au dispositif sans fil (800), le dispositif (200) étant configuré pour :
transmettre au moins un message de configuration au dispositif sans fil (800), l'au moins un message de configuration comprenant ou indiquant les différentes configurations de CSI associées à différents états de CSI (502 ; 504) du dispositif sans fil (800), dans lequel les états de CSI (502 ; 504) comportent au moins un état de CSI actif (502), dans lequel, selon la configuration de CSI associée à l'état de CSI actif (502), les CSI sont rapportées périodiquement par le dispositif sans fil (800) dans l'état de CSI actif (502), et dans lequel les configurations de CSI comprennent au moins un critère de transition pour une transition d'état entre les états de CSI (502 ; 504), dans lequel le critère de transition pour la transition vers l'état de CSI actif (502) comporte un changement des CSI ;
recevoir les CSI selon la configuration de CSI qui est associée à un état de CSI résultant d'une détermination, par le dispositif sans fil (800), de la transition d'état vers l'état de CSI parmi les états de CSI (502 ; 504) si le critère de transition correspondant est satisfait sur la base des configurations de CSI stockées au niveau du dispositif sans fil (800).

17. Dispositif selon la revendication 16, configuré en outre pour réaliser les étapes des revendications 11 ou 12.
